# NEW EUROPEAN PATENT SPECIFICATION

(11) **EP 0 149 899 B2**
(45) Date of publication and mention of the opposition decision: **05.02.1997**
(45) Mention of the grant of the patent: 06.11.1991
(21) Application number: 84308546.5
(22) Date of filing: 07.12.1984
(51) Int. Cl.: G09G 3/36, G02F 1/137

(54) **A liquid crystal display device**
Flüssigkristallanzeigeeinrichtung
Dispositif d'affichage à cristaux liquides

(30) Priority: 09.12.1983 JP 232963/83; 04.07.1984 JP 138832/84; 15.10.1984 JP 215363/84
(43) Date of publication of application: 31.07.1985
(73) Proprietor: SEIKO INSTRUMENTS INC., Tokyo 136 (JP)
(72) Inventor: Harada, Takamasa Seiko Instruments and, Koto-ku Tokyo (JP); Taguchi, Masaaki Seiko Instruments and, Koto-ku Tokyo (JP); Iwasa, Koji Seiko Instruments and, Koto-ku Tokyo (JP)
(74) Representative: Sturt, Clifford Mark

(56) References cited:
- EP-A- 0 032 362
- EP-A- 0 092 181
- EP-A- 0 137 726
- EP-A- 0 146 231
- DE-A- 3 401 073
- DE-A- 3 414 704
- FR-A- 2 231 178
- FR-A- 2 544 884
- JP-A- 5 217 397
- US-A- 4 380 008
- Recent Develpments in Condensed Matter Physics, vol. 4 (1981), pages 309 to 319, N.A. Clark and S.T. Lagerwall (published in 1981), "Electro-Optic Switching Process in Liquid Crystals"
- Mol. Cryst. Liqu. Cryst., 1983, N.A. Clark, pages 213-234, vol. 94 "Ferroelectric Liquid Crystal"
- Electro-Optics Using the Surface Stabilized Structure, Appl. Phys. Lett. Vol. 36 (11) June 1980, p. 899-901, N. A. Clark, "Submicrosecond Bistable Electro-Optic switching in liquid crystals"

## Description

This invention relates to liquid crystal display devices.

Liquid crystal display devices may be driven by a relatively low voltage, have a relatively very small power consumption and may be made relatively thin and small. Liquid crystal display devices are used, for example, in watches, calculators, etc. Recently CMOS - LSI semiconductor technology has developed and this gives great scope for the further development of liquid crystal display devices so that they may be used in personal computers and OA instruments. It seems that in the future liquid crystal display devices will find application in many different kinds of information and processing instruments and will be driven directly with CMOS - IC. However, one problem with conventional liquid crystal display devices is how to attain a display capacity and response time of the same level as a CRT display device.

The present invention seeks to provide a liquid crystal display device which has a relatively large information display capacity and high speed response and which is suitable for use with high level information processing instruments.

A conventional liquid crystal material for display use is thermotropic and has many liquid crystal phases at different temperatues. As a rough classification, a liquid crystal material has a nematic phase which has a non-layered construction (referred to as N phase) and a smectic phase which has a layered construction (referred to as Sm phase).

The Sm phase is sub-classified into a smectic A phase of one axial characteristic (referred to as SmA phase) and a smectic C phase a bi-axial characteristic (referred to as SmC phase), the thickness of each layer substantially corresponding to the length direction of the molecule of the liquid crystal material.

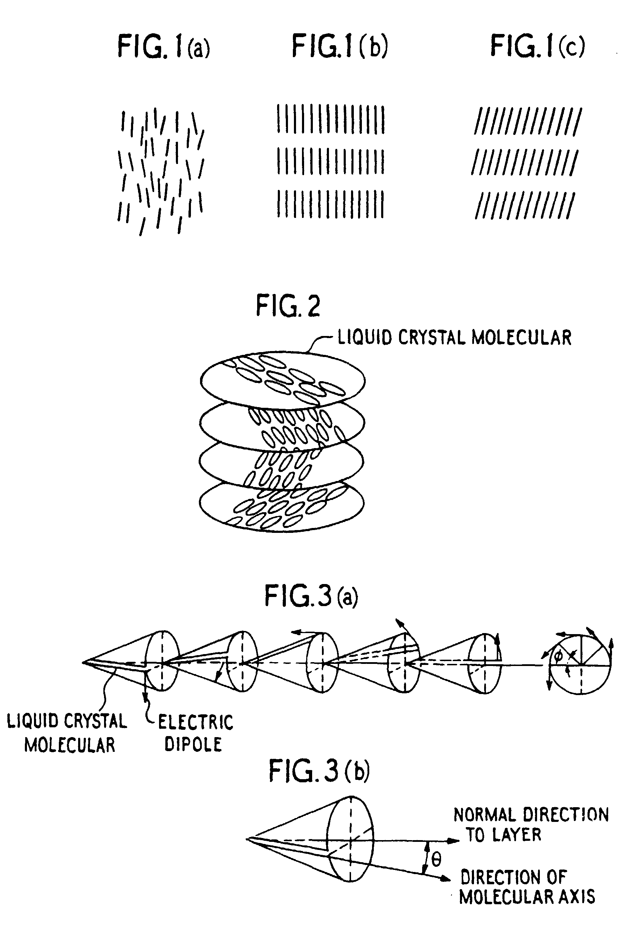

Figure 1 shows molecular alignment of the N, SmA and SmC phases Figure 1(a) showing the N phase, Figure 1(b) showing the SmA phase and Figure 1(c) showing the SmC phase.

Furthermore, if the molecule of the liquid crystal material has an asymmetric carbon atom and has not a racemic modification, it will be of a spiral construction. In the case of the N phase, the long axis of the liquid crystal molecule is located in a thin layer, the molecules aligning in one direction. If the molecular direction in the layers is gradually twisted each layer this is a chiral nematic phase. Figure 2 shows a molecular alignment of the chiral nematic phase. In the case of the Sm phase, if the molecules are aligned in a spiral whose axis is normal to the layers this is a chiral smectic C phase (referred to as SmC* phase).

Figure 3(a) shows a molecular alignment of the SmC* phase.

Referring to the SmC* phase particularly, the direction of the long axis (referred to as the "molecular axis" hereinafter) of the liquid crystal molecule in one layer is inclined at an angle θ to the normal to the layer, the angle θ being constant in each layer.

Figure 3(b) shows the relationship of the molecular axis to the direction normal to the layer.

On the other hand, in the case of viewing molecular alignment of the SmC* phase from a direction normal to the layer, a direction angle φ rotates in each layer by a constant value (Figure 3(a) shows a rotation of 45° in each layer) whereby the molecular alignment causes a spiral construction. Generally, the SmC* phase has not only a spiral construction but also has an electric dipole moment in a direction perpendicular to the molecular axis and shows a ferro-electric characteristic.

A ferro-electric liquid crystal material is disclosed by Meyer 1975 (J. de. phys. $\overline{\text{36}}$, 69 1975). One synthesized ferro-electric liquid crystal material is DOBAMBC (2-methyl butyl P - [(P-n-decyloxybenzyliden) amino] 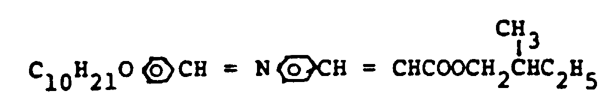 and has been used for research into ferro-electric liquid crystal properties.

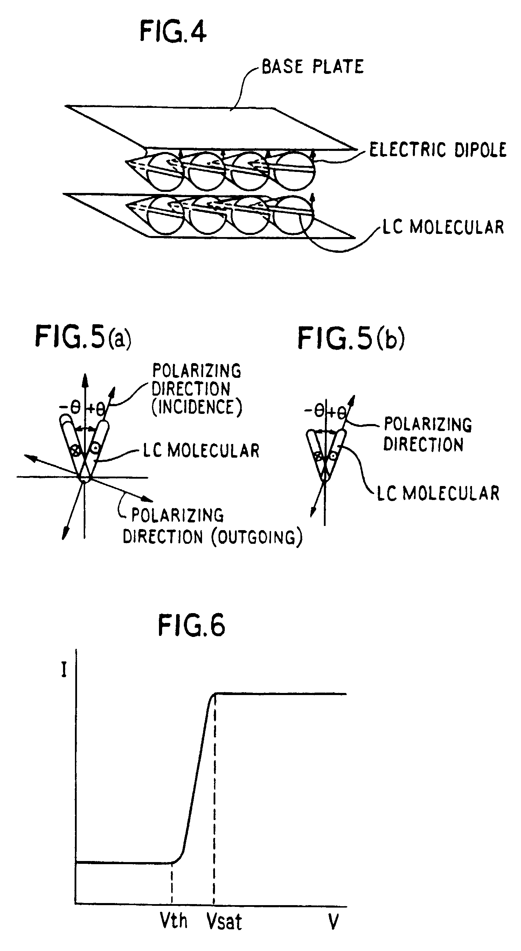

The SmC* phase has a spiral construction, the pitch of which differs according to liquid crystal material, but generally is several µm. If a liquid crystal material with an SmC* phase is poured into a gap of 1µm in a display cell, this gap being thinner than the pitch of the spiral construction, then the spiral construction disappears. The molecular alignment construction when the spiral construction has disappeared is shown in Figure 4 which shows the geometrical relation with base plates of the display cell. The liquid crystal molecules are parallel with the base plates, i.e. the molecular axes are parallel with the base plates and is aligned at an angle of θ to a line normal to the layer, in this case, the line normal to the layer is parallel to the base plates.

Therefore, a layer is perpendicular to the base plates. In the case of inclination of θ normal to the layer, there are domains which are inclined at +θ for the clockwise direction from the normal and domains which are inclined at -θ for counter-clockwise direction from the normal.

A liquid crystal material with a SmC* phase generally has an electric dipole perpendicular to the molecular axis. If the electric dipole is aligned towards the upper direction to one base plate in one domain, the electric dipole is aligned towards the lower direction in the other domain to the other base plate. If an electric field is applied between the base plates, the liquid crystal molecules of the whole of the display cell are aligned in an inclined position of +θ or -θ from a line normal to the layers (+ or - is determined by the direction of the electric dipole, these being the so-called " +θ position" and "-θ position").

The liquid crystal molecule moves from the +θ position to the -θ position or from the -θ position to the +θ position when an electric field is applied thereto. This construction is that of the SmC phase since the molecules of the whole display cell are aligned in the +θ position or the -θ position, therefore, the SmC phase is made by destroying the spiral construction using a display cell with a thin gap between the base plates. However, the SmC phase has the cone construction shown in Figure 3(b) as an image of spiral construction when it moves from the ±θ positions to the contrary position thereof. The usual SmC phase does not cause this action when an electric field is applied thereto. It is usable in a display cell moving the liquid crystal molecules between the +θ position and the -θ position and by attaching a pair of polarising members on the base plate and by selecting electric field polarity.

Figure 5 shows the relation between the polarising directions of the pair of polarising members and the ±θ positions of the liquid crystal molecules for use as a display device.

In Figure 5(a) the polarising axis of the polarising member on the side on which light is incident, corresponds to the +θ position, the polarising axis of the other polarising member of the outgoing side is rotated at 90° to the polarising axis of the polarising member at the incident side.

In Figure 5(a) light which is polarised by the polarising member at the incident side reaches the polarising member at the outgoing side without change of polarisation direction when the liquid crystal molecules are in the +θ position. Thus the light does not pass through the polarising member at the outgoing side since the directions of polarisation of the polarising members are at right angles. This condition is a dark condition. When the molecules of the liquid crystal material move to the -θ position, the plane of polarisation of the light incident on the polarising member on the outgoing side is parallel to its polarising axis and so is transmitted thereby. This is the bright condition. The conditions are achieved if θ is 22.5° and the thickness of the display cell has a preferred value.

It is necessary to have a relation between the thickness d of the display cell and anisotropy Δn of the liquid crystal material as follows:
d = (2n - 1) α/Δn n: refraction rate
α = Cπ/ω c: light speed
ω : angular frequency of light.

Figure 5(b) shows the condition in which the direction of the polarising member on the incidence and outgoing sides are parallel so that the θ position is the bright condition and the -θ position is the dark condition. The relation of thickness of the display cell and Δn is the same as above and the bright and dark conditions are attained with θ preferably 22.5°. This principle of a display device is presented by Clark and Lgerwall (Appl. Phys. Lett. 36,899, 1980). This paper indicates that a display device in which a thin display cell has a pair of polarising members has the following features:
(1) a high speed response of the order of µsec;
(2) a memory characteristic;
(3) a preferred threshold value characteristic.
We have confirmed the high speed response by experimentation.

Furthermore, the memory characteristic, where the ±θ positions are maintained after the electric field which caused them is removed is also confirmed. However, the preferred threshold value characteristic has not been confirmed.

Figure 6 shows the relation between optical transparent intensity I and applied voltage V. The molecules of the liquid crystal material do not move and the optical transparent intensity does not change when the applied voltage is less than Vₜₕ. The molecules begin to move at an applied voltage greater than Vₜₕ and the optical transparent intensity remarkably changes with the applied voltage.

If the applied voltage becomes greater than Vₛₐₜ, the optical transparent intensity will not change further because all the molecules are in the +θ position or -θ position. The voltages Vₜₕ and Vₛₐₜ are good parameters to set the threshold value of the liquid crystal material. According to our data Vₜₕ and Vₛₐₜ are preferably as follows:
Vₜₕ = 500 mV
Vₛₐₜ = 5 V
using DOBAMBC as the liquid crystal material. It is not possible, however, to drive a display device with 5 V at a selected point and 500 mV at a non-selected or half-selected point.

US-A-4,380,008 discloses an amplitude selective multiplexing method of driving a matrix type liquid crystal display device which includes a layer of guest-host type phase transition liquid crystal sandwiched between a pair of electrode groups including at least one transparent electrode group and arranged in the form of a matrix, intersecting portions of said electrode groups being employed as display segments for displaying information by driving column or row electrodes of said matrix electrode groups with a one-line-at-a-time scanning system, wherein said phase transition liquid crystal exhibits a hysteresis chracteristic in the relative brightness thereof against root mean square values of applied voltage, said amplitude selective multiplexing matrix driving method comprising: scanning said segments and applying across them a write-in voltage when the segments are to be changed from an off state to an on state, an erasing voltage when the segments are to be changed from the on state to the off state, and a holding voltage when a present on or off state of each of the segments is to be maintained; and applying a holding voltage across each of segments other than segments just subjected to scanning to maintain the present on or off state of the segments, wherein said write-in voltage has a root mean square value sufficient for effecting such a phase transition of said phase transition liquid crystal from a low brightness to a high brightness condition thereby to turn on said display device, said holding voltage has a root mean square value lower than said write-in voltage and not sufficient for effecting the phase transition of said phase transition liquid crystal thereby to hold the present brightness of said display device at the level it is at at the moment the holding voltage is applied, and said erasing voltage has a root mean square value lower than said holding voltage and sufficient for effecting such a phase transition of said phase transition liquid crystals from the high brightness to the low brightness condition thereby to turn off said display devices.

The invention provides a method and device as set out in the appended claims.

Other aspects of the invention are to be found in the appended claims.

The invention is illustrated, merely by way of example, in the accompanying drawings, in which:-
Figure 1(a), 1(b) and 1(c) are model illustrations of molecular alignment of N, SmA, SmC phases respectively, of a liquid crystal material;
Figure 2 is a model illustration of the molecular alignment of a chiral nematic phase of a liquid crystal material;
Figures 3(a) and 3(b) are model illustrations of molecular arrangement of a chiral smectic C phase of a liquid crystal material;
Figure 4 is a model illustration of the molecular arrangement of a liquid crystal material with a chiral smectic C phase relative to base plates of a display cell;
Figures 5(a) and 5(b) are model illustrations showing the molecular states in a conventional display device;
Figure 6 is a graph showing the relationship between transparent intensity and applied voltage when a voltage is applied to a liquid crystal display device in a bright condition;
Figure 7 shows a change of optical transparent intensity when an AC pulse is applied to a liquid crystal display device just after a DC voltage has been applied;
Figure 8 shows a change of optical transparent intensity when AC pulse amplitude and frequency are changed in Figure 7;
Figure 9 illustrates the molecular state in a display device according to the present invention;
Figure 10 shows one embodiment of a driving waveform of a first driving method of a liquid crystal display device according to the present invention using a time sharing driving system;
Figure 11 shows a relationship between applied voltage and response time;
Figures 12 to 17 show basic signal embodiments so as to apply ±1/3 Vₐₚ AC pulse in a non-selecting condition and ±Vₐₚ in a selecting condition in the first driving method of Figure 10;
Figure 18 shows φY, $\overline{\text{φ}}$Y, φX and $\overline{\text{φ}}$X signals using the basic signals of Figures 12 to 17;
Figure 19 shows signals applied to a scanning electrode and a display electrode by selecting the signals of Figure 8 by a scanning signal and display data;
Figure 20 is a block diagram of one embodiment of a liquid crystal display device according to the present invention;
Figure 21 shows one embodiment of a driving voltage generating circuit of the display device of Figure 20;
Figure 22 is a circuit diagram of a driving circuit and scanning electrode driving circuit of the display device of Figure 20;
Figure 23 is a timing chart of a control signal for controlling said driving voltage generating circuit of Figure 21;
Figure 24 shows a driving waveform for a driving circuit according to the present invention to which a ±1/N Vₐₚ AC pulse is applied in a non-selecting condition according to the first driving method of Figure 10;
Figures 25 and 26 are block diagrams of a common electrode drive circuit and a segment electrode drive circuit of another embodiment of the liquid crystal display device according to the present invention;
Figures 27 and 28 are waveforms illustrating the operation of the display device of Figures 25 and 26;
Figure 29 illustrates another driving method of a liquid crystal display device according to the present invention;
Figures 30 to 34 illustrate various further driving methods for a display device according to the present invention;
Figures 35 to 41 show further embodiments of driving methods of a liquid crystal display device according to the present invention to produce a tone display; and
Figure 42 shows the relationship between response time and temperature of a ferro-electric liquid crystal material.

Before describing the principle of the present invention, change of optical transparent intensity when an AC pulse is applied to a liquid crystal display device after a DC voltage has been applied thereto will be explained. The liquid crystal display device is as shown in Figure 5(a), the display cell having a thickness of about 1 µm.

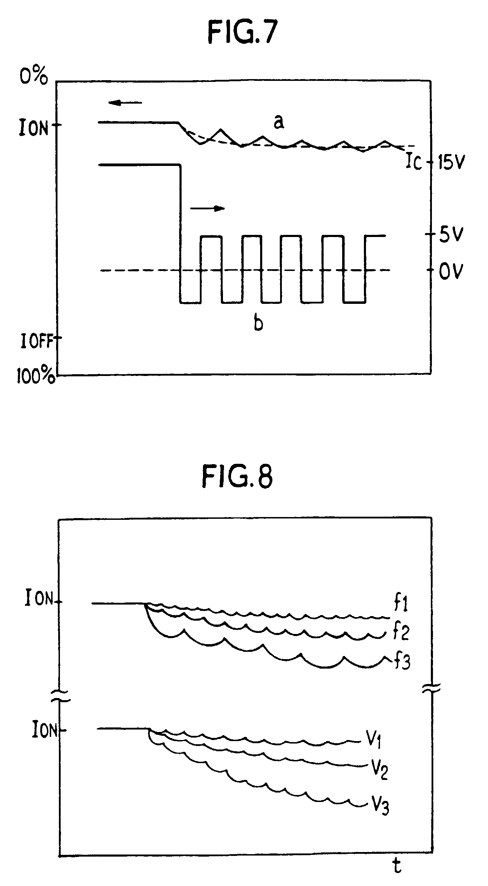

Figure 7 shows the change of optical transparent intensity when the illustrated voltage waveform is applied thereto. The vertical axis shows optical transparent intensity. I_{ON} is the optical transparent intensity when the applied voltage is greater than Vₛₐₜ and the liquid crystal display device has polarising members whose planes of polarisation are at right angles to one another. I_{OFF} shows the optical transparent intensity when a voltage greater than Vₛₐₜ of the opposite polarity is applied and the liquid crystal display device is the most transparent. In Figure 7, the polarity and the value of DC voltage are selected so that the optical transparent intensity is I_{ON}. The optical transparent intensity is I_{ON} when the applied voltage is 15V DC, after which, the optical transparent intensity becomes a constant I_{c} gradually with oscillation. The optical transparent intensity I_{c} is smaller than I_{ON} but it is usable as a black level (dark condition). On the other hand, the optical transparent intensity has changed from I_{OFF} to a constant I_{c}, with oscillation by applying a DC voltage of the opposite polarity to obtain I_{OFF} and after that applying AC pulses of ±5V thereto. In this case, I_{c},is greater than I_{OFF} and is usable as a white level (bright condition).

Figure 8 shows change of optical transparent intensity when AC pulse amplitude and frequency are changed. In the case of frequency change, there are shown three optical transparent intensity profiles in the upper portion of Figure 8 for frequencies f₁, f₂, f3 (f₁ > f₂ > f₃). The higher the frequency of the AC pulses, the higher the optical transparent intensity I_{c} becomes and it is scarcely attenuated. In the case of amplitude change of the AC pulses, there are shown three optical transparent intensity profiles in the lower portion of Figure 8 for amplitudes V₁, V₂, V₃ (V₁ < V₂ < V₃). The smaller the voltage amplitude of the AC pulses, the higher the optical transparent intensity I_{c} becomes and it is scarcely attenuated.

The present invention seeks to provide a liquid crystal display device where a display condition can be changed by applying a selected voltage, e.g. a DC voltage and then to maintain the display condition by the application of an AC voltage. In other words, on the molecular level, the molecules of the liquid crystal material are moved to the + θ or -θ position by applying a selected voltage, e.g. a DC voltage or pulse, and after that, are maintained in the + θ or -θ position by the AC pulses so that a display is obtained.

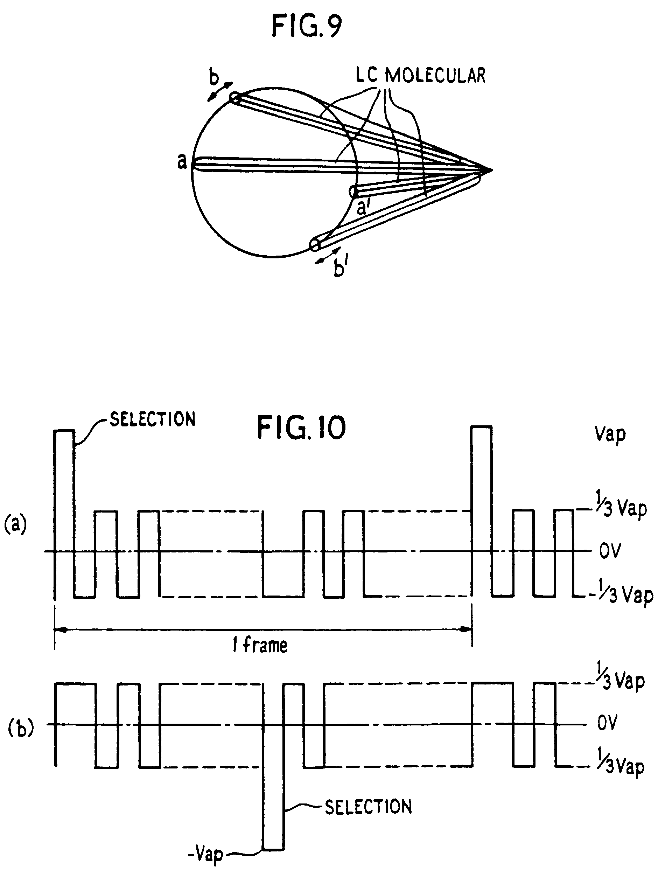

Figure 9 illustrates the molecular state in a liquid crystal display device according to the present invention. When a DC voltage or pulse is applied, a molecule moves to "a" or "a"' (±θ position) and subsequently will be oscillated by the AC pulses and stay in "b" or "b"' position. The "b" or "b"' position is greatly influenced by the thickness of the display cell, alignment condition, voltage amplitude of the AC pulses and frequency.

In a liquid crystal display device according to the present invention, a display is attained by using a molecular condition which is not parallel to the base plates or the polarising members. The condition is that shifted from the ±θ position which are parallel to the base plates.

Figures 10(a) and 10(b) show one embodiment of a driving waveform of a first driving method of a liquid crystal display device according to the present invention in a line sequential scanning system. The liquid crystal display device is of the X-Y matrix type, an electric potential as a base being applied to scanning electrodes. Figures 10(a) and 10(b) illustrate voltages which are applied to one picture element of the first scanning electrode. Dark and bright conditions are determined by the polarising members and molecular positioning as shown in Figure 5(a). If the polarising members are reversed to that shown in Figure 5(a) (i.e. the planes of polarisation of the polarising member at the outgoing side is aligned with the -θ position and the plane of polarisation of the polarising member at the incidence side is aligned perpendicularly) the bright and dark conditions are reversed.

Molecular positioning is determined by the direction of the electric dipole movement and direction of voltage applied to the picture element, and dark and bright conditions are determined by the positions of the polarising members. Accordingly, a particular condition is obtained by two driving waveforms: by way of explanation Figure 10(a) shows the dark condition and Figure 10(b) shows the bright condition.

An oscillating waveform in Figure 10(a) shows line sequential scanning, a display electrode being at positive potential Vₐₚ relative to the scanning electrode in a selecting timing and after that becomes a negative potential 1/3 Vₐₚ and finally becomes AC pulses with non-selected timing.

The waveform of Figure 10(b) is 1/3 Vₐₚ when the driving waveform of Figure 10(a) is positive Vₐₚ - (positive or negative potential is determined by a scanning electrode potential), after that, becomes 1/3 Vₐₚ at a timing of -1/3 Vₐₚ of the driving waveform, and finally becomes AC pulses. The scanning electrode becomes negative potential Vₐₚ by a second selective timing, after that, becomes 1/3 Vₐₚ and finally becomes AC pulses.

The driving waveform of Figure 10(a) becomes -1/3 Vₐₚ in a timing in which the driving waveform of Figure 10(b) become -Vₐₚ and 1/3 Vₐₚ.

Figures 10(a) and 10(b) write dark and bright conditions into the picture element by two scannings of the scanning electrode. One frame for writing the dark and bright conditions corresponds to two frames of general line sequential scanning, a writing scanning for the dark condition is the first scanning and a writing scanning for the bright condition is the second scanning. A molecule of a ferro-electric liquid crystal material driven in accordance with the waveforms shown in Figures 10(a) and 10(b) are moved to "a" or "a"' positions of Figure 9 or adjacent thereto when a high voltage Vₐₚ is applied, after that, the molecule will vibrate in the "b" or "b"' position under the influence of the AC pulses. In this case, for selecting a driving frequency the molecule is set to be operated in the "a" or "a'" position of Figure 9 by a high voltage. Namely, if the driving frequency is fD, and the response time of the molecule at voltage Vₐₚ is τ, then τ ≦ 1/2 fD.

The relationship between response time and voltage is as follows:
- η =: rotary viscosity
- Ps =: self polarisation
- d =: thickness of the display cell
η, Ps and "d" are constant,
τ α 1/V.

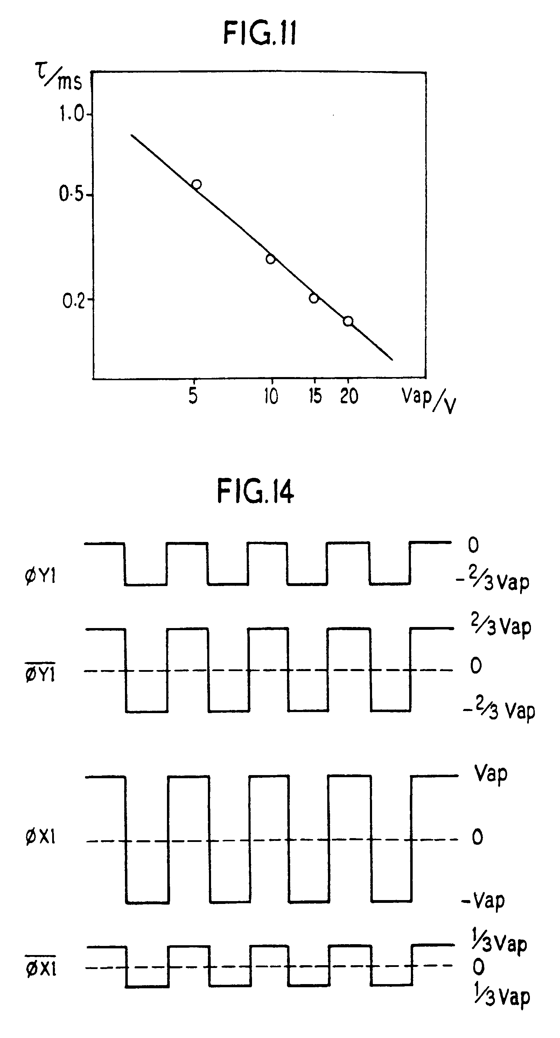

Figure 11 shows the relation between applied voltage and response time as a logarithmic relationship. The line in Figure 11 is substantially straight, and it is understood from τ α 1/V that the response time increases as the applied voltage increases and so it is possible to use a greater driving frequency than τ ≦ 1/2 fD became it moves to the "a" or "a"' position of Figure 9 in a short time. Thus it is possible to set the driving frequency and applied voltage so as to obtain a good display condition in a range in which a display does not change to bad by a kind of display (stationary display or moving display) or driving device.

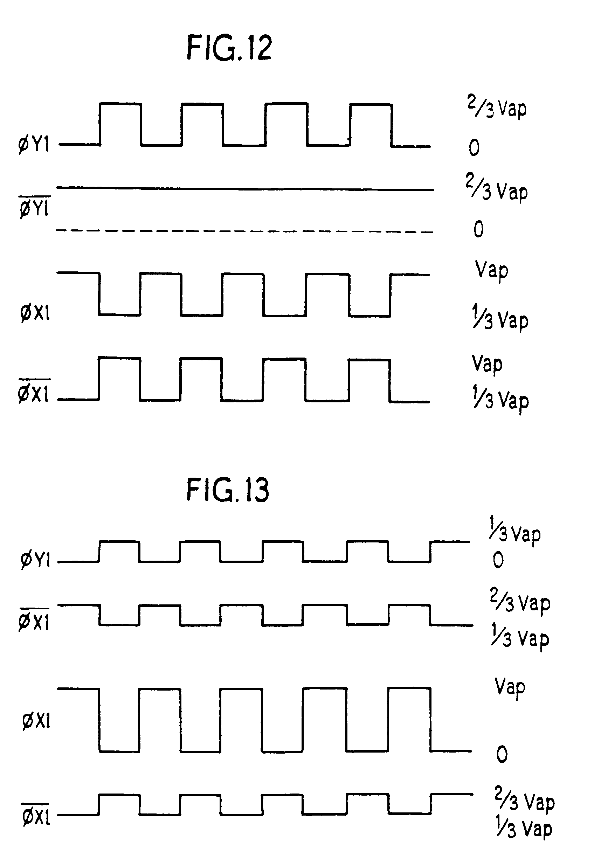

Figures 12 to 14 illustrate three embodiments of a signal for the first scanning in one frame of the driving method of Figure 10 where:
φY1 : selecting scanning electrode signal
$\overline{\text{φY1}}$: non-selecting scanning electrode signal
φX1 : selecting display electrode signal
$\overline{\text{φX1}}$ : non-selecting display electrode signal

A positive voltage Vₐₚ is applied to a picture element, then an AC pulse of 1/3 Vₐₚ is applied to obtain the dark condition.

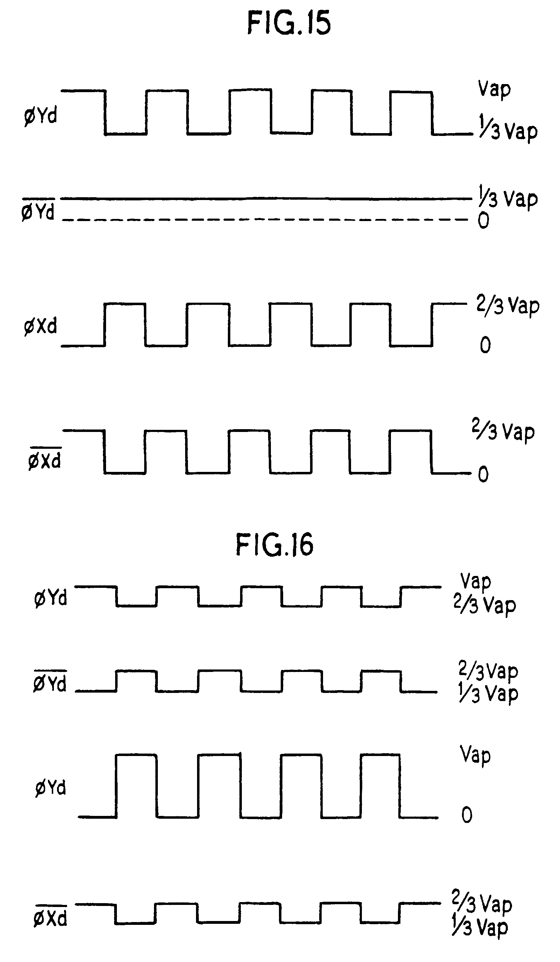

Figures 15 to 17 illustrate three embodiments of a signal for the second scanning in one frame where:
φYd selecting scanning electrode signal
$\overline{\text{φYd}}$ : non-selecting scanning electrode signal
φXd: selecting display electrode signal
$\overline{\text{φXd}}$ : non-selecting display electrode signal

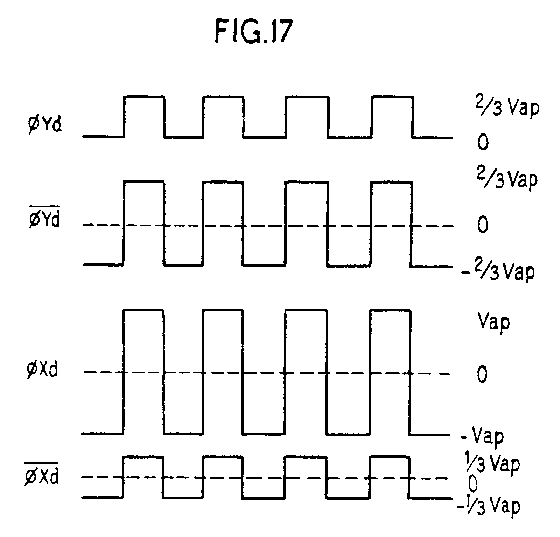

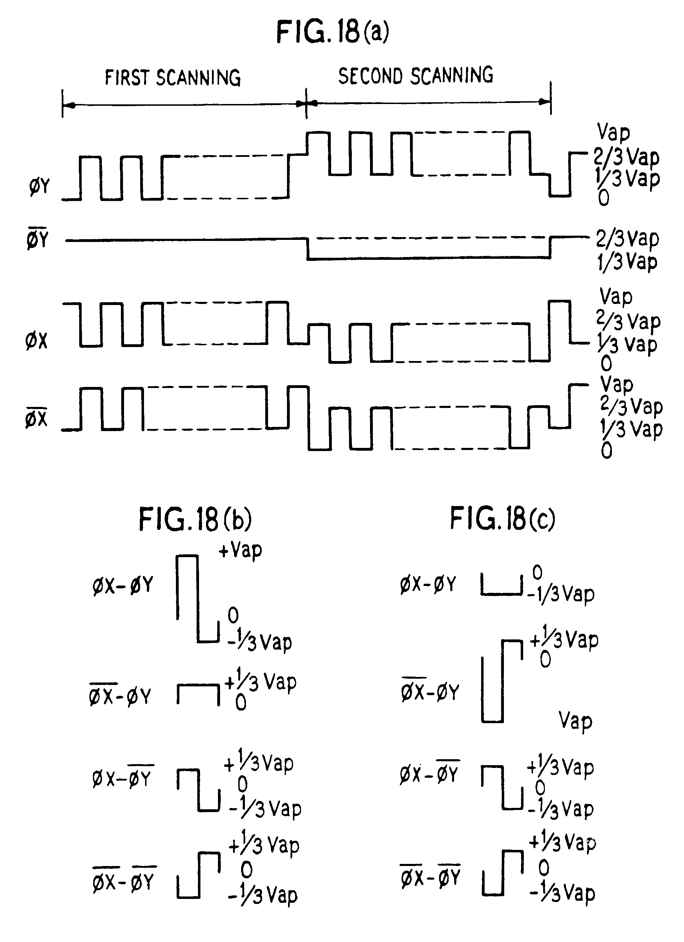

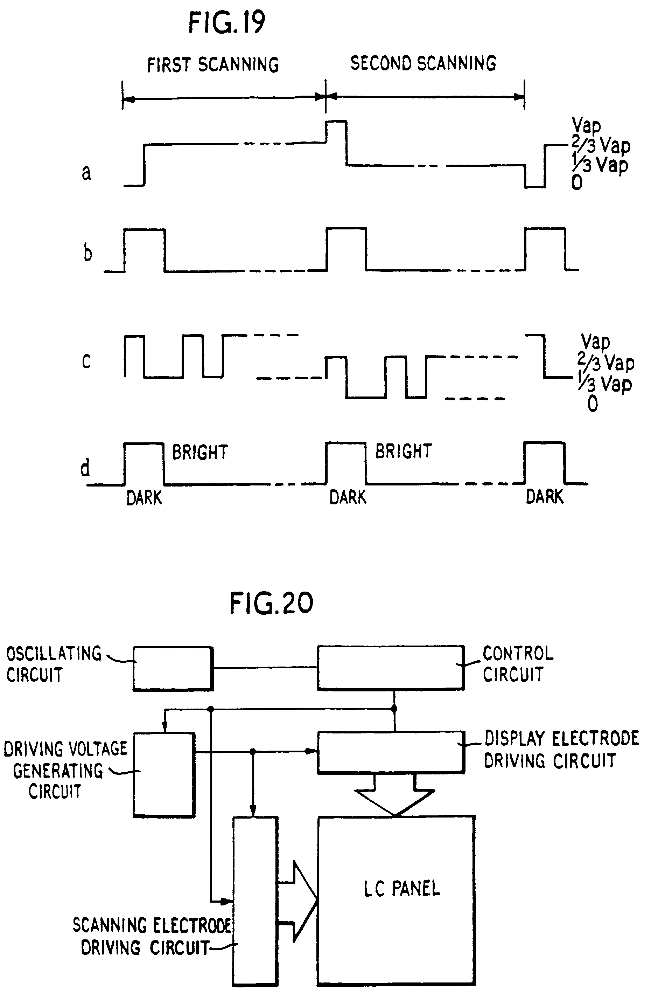

A negative voltate Vₐₚ is applied to a picture element, and then an AC pulse of 1/3 Vₐₚ is applied to obtain the dark condition. Figures 12, 13, 15 and 16 include DC pulses, Figures 14 and 17 included AC pulses. In practice, it is possible to form φY, $\overline{\text{φY}}$, φX and $\overline{\text{φY}}$ by mixing a signal of Figures 15 to 17.and the signal of Figures 12 to 14. Figure 18 shows one embodiment of φY, $\overline{\text{φY}}$, φX and $\overline{\text{φX}}$ which are made of a mixture of the first scanning signal of Figure 12 and the second scanning signal of Figure 15. The signals φXd and $\overline{\text{φXd}}$ inverted to φX and $\overline{\text{φX}}$ it use, in common, display data of the first and second scannings. Figure 18(b) shows a waveform applied to a selecting picture element and a non-selecting picture element. A DC pulse "φX-φY" is applied to a selecting picture element, an AC pulse "$\overline{\text{φX}}$-$\overline{\text{φY}}$" is applied to a non-selecting picture element. Figure 18(c) shows a waveform which is applied to the selecting picture element and the non-selecting picture element in the second scanning. Figure 19 shows one embodiment of a voltage waveform which is applied to a display electrode based on display data and a voltage waveform which is applied to a scanning electrode by using φY, $\overline{\text{φY}}$, φX and $\overline{\text{φX}}$.

A voltage waveform "a" in Figure 19 shows a waveform which is applied to a scanning electrode, a selecting scanning electrode signal φY in Figure 18 is selected by a timing of high level line sequential scanning signal "b", non-selecting scanning electrode signal φY in Figure 18 is selected by a low level thereof.

A voltage waveform "c" shows a waveform which is applied to a display electrode, a voltage waveform "c" selects the selecting display electrode signal φX of Fig. 18 at timing of high level display data "d" (dark condition) and selects the non-selecting display electrode signal $\overline{\text{φX}}$ it of Figure 18 at a timing of low level display data "d".

A driving waveform "a" of Figure 10 shows a change of display electrode potential which is based on the scanning electrode when the waveforms "a" and "b" are applied to the scanning electrode and the display electrode.

Driving waveforms "a" and "b" in Figure 10 are ±Vₐₚ during a half time of selecting time of the selecting electrode, a remaining time becoming 1/3 Vₐₚ amplitude AC pulses as shown in the waveforms of Figures 12 to 17.

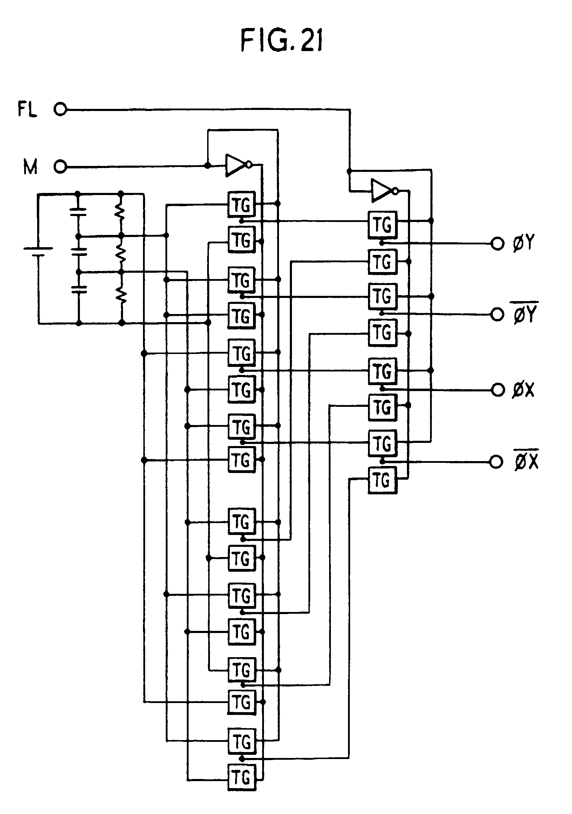

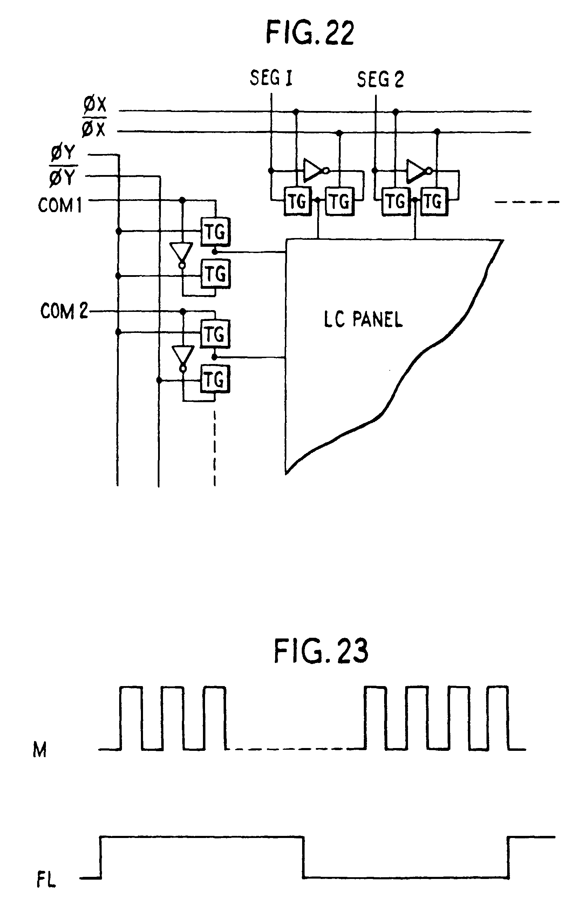

Figure 20 shows a liquid crystal display device according to the present invention comprising an oscillating circuit, a control circuit, a driving voltage generating circuit, a display electrode driving circuit, a scanning electrode driving circuit and a liquid crystal display panel. Figures 21 and 22 show the driving voltage generating circuit, the display electrode driving circuit and the scanning electrode driving circuit in detail. Figures 21 and 22 use transmission gates as analog switches.

The driving voltage generating circuit of Figure 21 shapes the voltage waveforms in Figures 12 and 15 and further shapes signals φY, $\overline{\text{φY}}$, φX and $\overline{\text{φX}}$ in Figure 18.

A signal M is a driving signal shaped by the control circuit, the voltage waveform in Figures 12 and 15 being shaped by a transmission gate switch via the driving signal, after that, the signals φY, $\overline{\text{φY}}$, φX and $\overline{\text{φX}}$ are shaped by switching the driving signal in Figure 15 according to a scanning switching signal FL distinguishing between the first and second scannings.

Figure 23 is a timing chart of the driving signal M and the scanning switching signal FL.

Figure 22 shows one embodiment of the driving circuit to apply the signals φY, $\overline{\text{φY}}$, φX and $\overline{\text{φX}}$ by scanning signals COM-1 and COM-2 and display data signals SEG-1 and SEG-2 to the scanning electrode and the display electrode of the liquid crystal panel. The driving circuit is constructed of transmission gates and the driving method uses ±Vₐₚ during a half time when the scanning electrode is selected and after generally it becomes an 1/N Vₐₚ amplitude AC pulse signal.

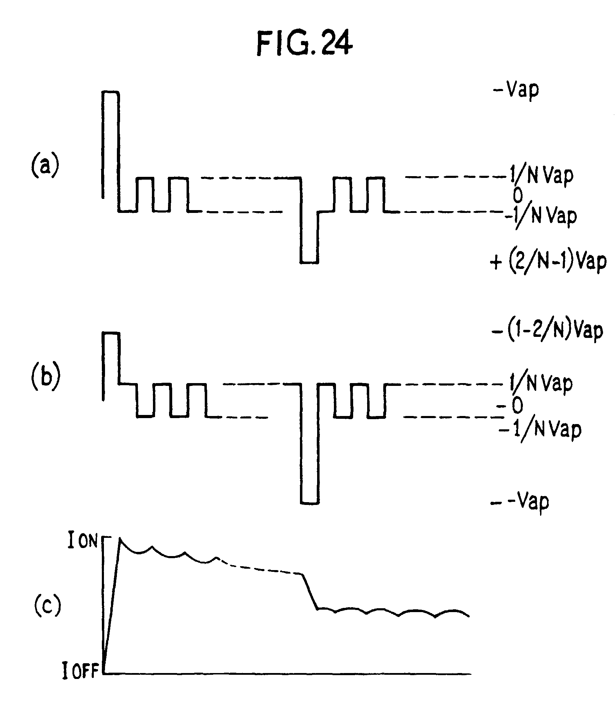

Figures 24(a) and 24(b) show driving waveforms for a general driving method using a 1/N Vₐₚ amplitude AC pulse signal in a non-selecting condition, i.e. the scanning signal is low level. On the other hand, Figures 24(a) and 24(b) become (2/N-1)Vₐₚ voltage in a half time of selected half time when it is selected by a scanning signal in the second scanning. Similarly, Figure 24(b) becomes (1-2/N)Vₐₚ voltage in a half time of selected half time when it is selected by a scanning signal.

Accordingly, the molecules of the liquid crystal material moves toward "a" and "a"' positions of Figure 9 under the action of the ±Vₐₚ high voltage and after that, AC pulse 1/N Vₐₚ amplitude is applied whereby the display condition is maintained. The display is maintained in good condition by a larger N and small amplitude AC pulse signals, the optical transparent intensity approaching I_{ON}, these phenomena being preferable for a display. However, a (1-2/N)Vₐₚ voltage is applied thereto in the selecting condition (semi-selection) of the scanning signal except application of ±Vₐₚ, the polarity thereof being opposite to the ±Vₐₚ voltage.

The molecules of the liquid crystal material move towards contrary contrast corresponding to the ±(1-2/N)Vₐₚ voltage in the semi-selecting condition.

In the case of driving a liquid crystal display device by the driving waveform of Figure 24(a), the optical transparent intensity is as shown by the waveform of Figure 24(c), N being preferably selected taking into account the composition of the liquid crystal material and its molecular alignment.

A second method for a display device according to the present invention will now be described. The feature of this second driving method is to apply a liquid crystal operating voltage in a reverse direction in the first half of an electrode selecting condition, and a liquid crystal operating voltage in a normal direction in a latter half of the electrode selecting condition.

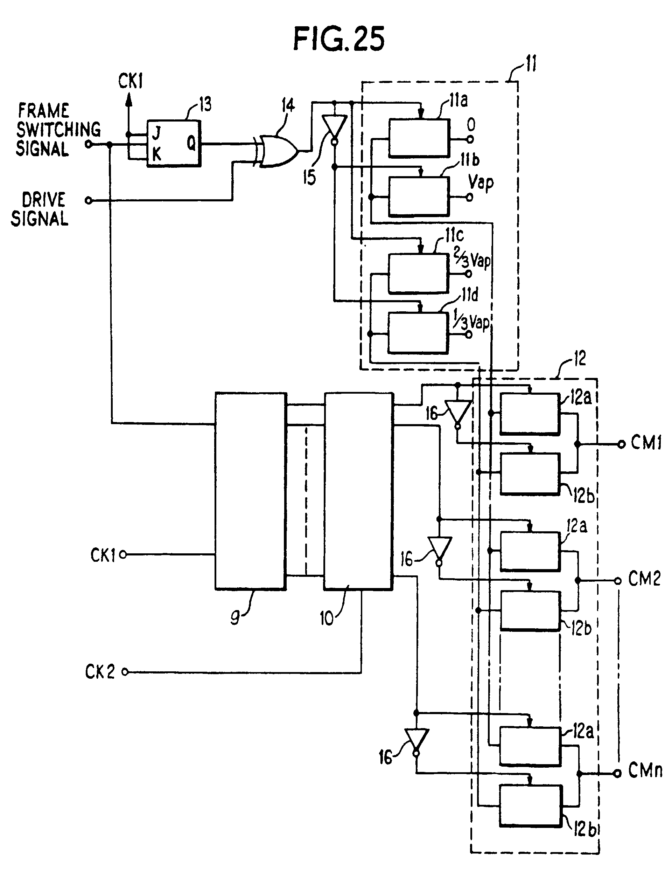

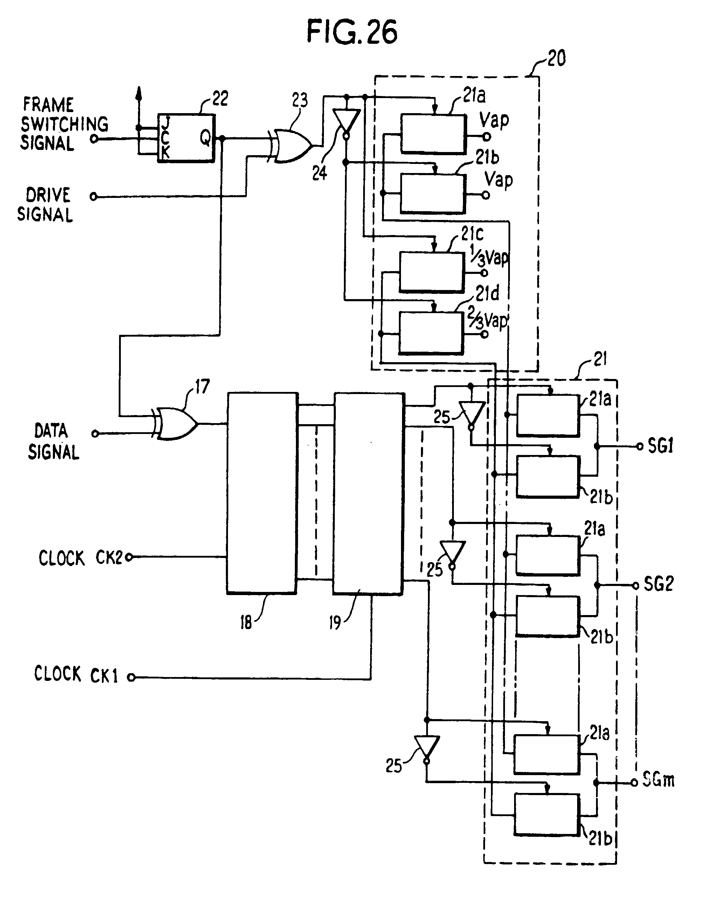

In the non-selecting condition an AC pulse voltage is applied to the liquid crystal material. The AC pulse voltage has a pulse amplitude and width at least one of which is less than the respective one of the liquid crystal operating voltage. An embodiment of the circuit to realise this second driving method is shown in Figures 25 and 26.

Figure 25 shows a common electrode drive circuit and segment electrode drive circuit of a liquid crystal display device according to the present invention. A shift register 9 shifts a frame scanning switching signal by a clock signal synchronised to a common electrode scanning speed. A latch circuit 10 latches a signal from the shift register 9 synchronised to the clock signal and supplies a drive voltage from an operation voltage generating circuit to a plurality of common electrodes CM₁, CM₂ ... CMₙ via an output gate cirucit 12. The drive voltage generating circuit 11 is such that liquid crystal drive voltage $\overline{{\text{V}}_{\text{ap}}}$, 2/3 Vₐₚ and D from a power source (not shown) are supplied therein via analog switches 11a, 11b, 11c, 11d such as transmission gates. The analog switches 11a, 11b receive the drive voltage Vₐₚ and the voltage and the analog switches 11c, 11d receive 2/3 Vₐₚ voltage and 1/3 Vₐₚ voltage, these voltages being applied to an output gate 12 as a pair of signals.

A frame scanning switching signal divider 13 is composed of a J-K flip flop and generates a frame scanning switching signal by a clock signal synchronising to the common electrode scanning speed. An. EX-OR gate 14 receives a signal from the frame switching signal divider 13 and a drive signal. The phase of the drive signal is reversed on application of a scanning signal. 0 voltage and 2/3 Vₐₚ or Vₐₚ and 1/3 Vₐₚ are generated from the drive voltage generating circuit 11 by applying the output signal of the EX-OR gate 14 to control terminals of the analog switches 11a, 11b, 11c, 11d, directly or indirectly via an inverter. An output gate has a plurality of pairs of analog switches 12a, 12b which receive an output signal from the drive voltage generating circuit 11. An output signal from the latch circuit 10 is directly applied to each analog switch 12a and is applied to the analog switch 12b after inversion by a respective inverter 16.

Figure 26 shows an embodiment of a segment electrode drive circuit of this embodiment of liquid crystal display device according to the present invention. An EX-OR gate 17 receives a frame switching signal and data signal and inverts the data signal when the frame switching signal is applied thereto. A shift register 18 receives a data signal from the EX-OR gate 17 and a segment electrode scanning timing signal, i.e. sub-scanning clock CK₂, shifts the data signal by the clock CK₂. A latch circuit 19 latches a signal from the shift register 18 synchronised to a clock signal CK, and supplies a drive voltage from a drive voltage generating circuit 20 to a plurality of segment electrodes SG₁, SG₂ ... SGₙ via an output gate circuit 21. The drive voltage generating circuit 20 receives a plurality of drive voltages V$\overline{{\text{}}_{\text{ap}}}$: 2/3 Vₐₚ, 1/3 Vₐₚ and 0 voltage from a power source (not shown) applied thereto via analog switches 20a, 20b, 20c, 20d and supplies the output signals of the analog switches 20a, 20b which receive the voltage-Vₐₚ and 0 voltage and the analog switches 20c, 20d which receive 2/3 Vₐₚ and 1/3 Vₐₚ voltages to an output gate 21 in pairs. A frame signal divider 22 is composed of a J-K flip flop and separately generates a frame signal synchronising to the frame switching signal. An EX-OR gate 23 receives a signal from the frame signal divider 22 and a drive signal inverts the phase when a drive signal is applied, 0 voltage and 2/3 Vₐₚ or Vₐₚ and 1/3 Vₐₚ voltages being generated from the drive voltage circuit 20 by applying the output signal of the EX-OR gate 23 to a control terminal of the analog switches 21a, 21b, 21c, 21d directly or indirectly via an inverter. An output gate 21 has a plurality of pairs of analog switches 21a, 21b which receives an output signal from the drive voltage generating circuit 20, an output signal from the latch circuit 19 being directly applied to each analog switch 21a and being applied to the switch 21b after inversion by a respective inverter 25.

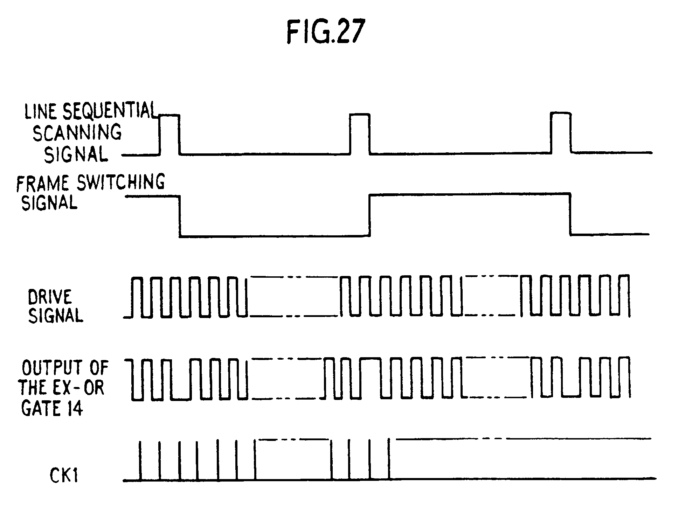

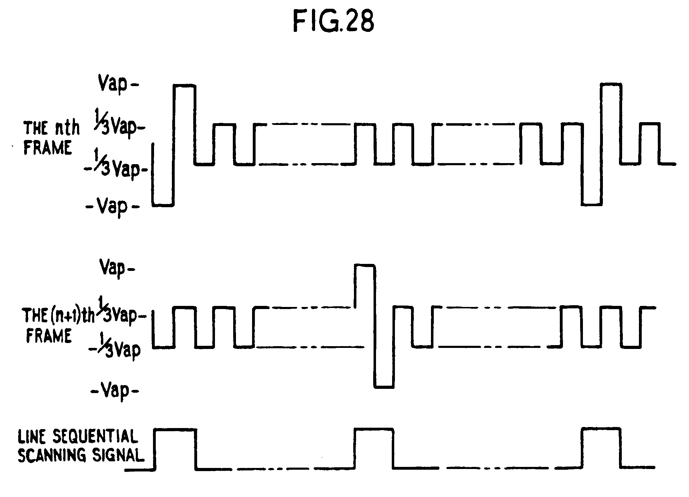

The operation of the liquid crystal display device illustrated in Figures 25 and 26 will be described with reference to Figures 27 and 28.

When the frame switching signal is generated, it is latched by the latch circuit 10 via the shift register 9 whereby a first common electrode CM1 is in a selected condition and common electrodes CM₂ ... CMₙ are in a non-selected condition.

The frame switching signal is converted to a signal synchronised to the common electrode switching clock by the frame signal dividing circuit 13 and applied to the EX-OR gate 14. The drive signal which is applied to the EX-OR gate 14 is applied to the drive voltage generating circuit 11 after the phase thereof has been reversed. According to the reversed condition, Vₐₚ voltage is applied to the common electrode CM₁ so that the operating voltage Vₐₚ which is opposite to a writing density in the first half of a line sequential scanning signal, 0 voltage is applied thereto so that the operating voltage Vₐₚ which is a forward direction which is preferable for writing density in the latter half of the line sequential scanning signal acts a picture element, an electric potential on said picture element is based on the common electrode to simplify the explanation. During a frame scanning operation after the end of the writing operation, an alternating voltage in which an amplitude width is about 1/3 of the drive voltage Vₐₚ and synchronised with the drive signal is applied thereto.

On the other hand, in the segment electrode drive circuit (as shown in Figure 26), the phase of the data signal is reversed by the EX-OR gate 17 and applied to the shift register 18. The phase of the data signal which is applied to the EX-OR gate is reversed by the line sequential scanning signal and is applied to the output gate 21. In the reversed condition, Vₐₚ and 0 voltages are applied to the segment electrode so that the operating voltage Vₐₚ in the reverse direction in the first half of the line sequential scanning signal and the operating voltage Vₐₚ in the normal direction in the latter half of the line sequential scanning signal operate the picture element and after that -1/3 Vₐₚ and 2/3 Vₐₚ voltages are applied preferably thereto so that an alternating voltage in which the amplitude is abort 1/3 of the drive voltage Vₐₚ and its frequency synchronised with the alternating clock in the frame during the frame scanning.

Namely, a negative electric field, which is an electric field of reverse direction against a necessary electric field is applied to a picture element for a bright or dark condition on the first common electrode in the first half of the line sequential scanning signal, a positive electric field which is an electric field in a reverse direction is applied to the picture element whereby a bright condition is written. According to this driving method an electric field in both positive and negative directions of the operating voltage is applied to the picture element. The liquid crystal material of the picture element does not store electric charge. Further, after the writing operation is finished, 1/N of the operating voltage, i.e. 1/3 Vₐₚ, which exceeds the threshold voltage Vₜₕ of the liquid crystal material is applied to the picture element using the 1/N bias method. The alternating electric field acts so as to keep dynamically the molecules of liquid crystal material oscillating about the "b" position as centre, this being in distinction to Figure 9 where the molecules of the liquid crystal material oscillate about the "a" position. As noted above, when the scanning operation for all common electrodes is finished, a writing operation for a dark condition starts in a second frame scanning.

Namely, a positive electric field which is an electric field of reverse direction against a necesseary electric field is applied to a picture element for a dark condition on the first common electrode in the first half of the line sequential scanning signal, and negative electric field which is an electric field in a reverse direction is applied to the picture element, whereby a dark condition is written. Further, the period and amplitude of positive and negative electric fields which are applied during a selecting condition is set to a value so that the molecules of the liquid crystal material react.

As noted above, in this second driving method, positive and negative electric fields act on the picture element which does not store electric charge. When a writing operation is finished, an alternating voltage of 1/3 of the operating voltage Vₐₚ is applied to the picture element whereby the picture element can keep dynamically in a selected dark condition. Thus a liquid crystal display panel may be driven by a 1/3 averaging method.

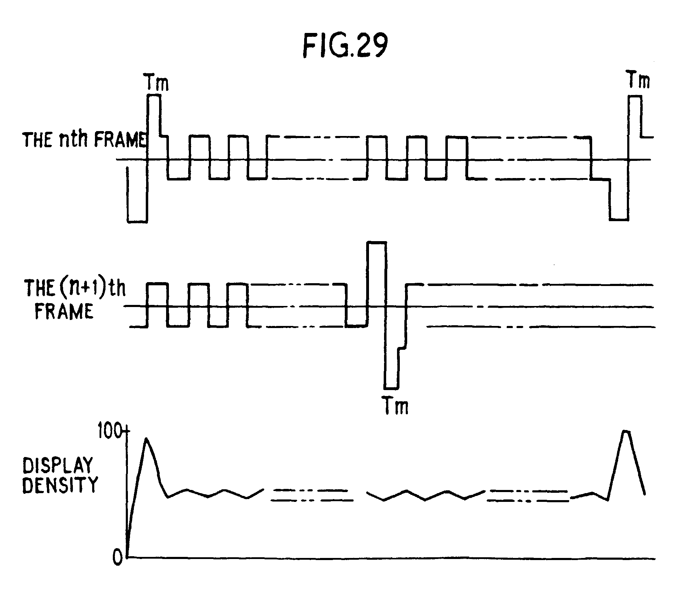

Figure 29 shows another embodiment of a driving method of a liquid crystal display device according to the present invention. In this embodiment, a pulse width Tm of a writing signal is modulated by a data signal according to display density. It is thus possible to execute a tone display by using an excess response characteristic shown in Figure 11.

According to this embodiment of the present invention, a liquid crystal display device comprises a pair of base plates on which a scanning electrode and alignment membranes are shaped on the surface thereof or opposed so that the alignment membranes are opposed inwardly. A smectic liquid crystal compound or material is inserted in a gap between the base plates, the width of the gap being less than the spiral pitch of the liquid material. An operating voltage in the reverse direction is applied thereto once in the first half of the electrode selecting condition, the operating voltage in the forward direction being applied thereto and the latter half of the electrode selecting condition, whereby it is possible to obtain an increase of life of the liquid crystal material and display performance by eliminating generation of charge when writing is executed. Further, an alternating voltage in the non-selecting condition is applied whereby the writing condition is dynamically maintained, so that there is no fear of unintentionally changing the writing condition in the non-selecting condition in spite of the low threshold voltage of the smectic liquid crystal material. It is possible to apply 1/N average bias method whereby a time-sharing dynamic display is performed.

With a smectic liquid crystal material in the SmC* phase the molecules rotate to the "a" or "a"' position of Figure 9 or until near said position when a positive or negative Vₐₚ voltage is applied to a picture element consisting of a selected electrode and a scan electrode, whereby a dark condition or bright condition is achieved. The optical transparent ratio declines with oscillation of the molecules about the "a" or "a"' position, this declining condition being the greatest just after the equal positive and negative AC pulses are applied thereto, and after that it is substantially unchanged.

In the case of a time-sharing system involving a large number of picture elements, a selecting time for the scanning electrode becomes shorter, a non-selecting time almost occupies, for example, in the case of 1/n duty driving ratio, a time t₁ for selecting the one scanning electrode in one scanning time tₒ where t₁ = tₒ/n, and the non-selecting time is${\text{t}}_{\text{2}} \text{=} \frac{{\text{N}}^{\text{0}} {\text{- 1)t}}_{\text{0}}}{\text{n}} \text{.}$

The optical transparent ratio when AC pulses in the non-selecting condition are applied varies slightly, but its value is substantially unchanged. Since this condition occupies almost all of the scanning time it is seen by the eye as a substantially constant contrast of the picture element, which contrast is substantially independent of the duty ratio.

According to experiment contrast is substantially constant for a display with a duty ratio of 1/8 to 1/256. The SmC* phase is preferable for time-sharing of a display device with a relatively large number of picture elements compared with display device using a TN-type liquid crystal material where contrast is reduced with increase in the number of picture elements because there is no difference in the actual voltage between the selecting and non-selecting conditions. The response time of the SmC* phase is of the order of 10 µsec and so the number of picture elements in a time-sharing system is given by:$\text{n =} \frac{\text{30000(µsec)}}{\text{10 x 2(µsec)}} \text{= 1500}$ However, it is necessary to provided 30 µsec for one scanning operation, said 2 shows to have a positive or negative voltage in the selecting time.

It is thus possible to drive a liquid crystal display device according to the present invention with a duty ratio of 1/1500 if the response time is the maximum currently possible. Further, it is possible to maintain a constant contrast with a duty ratio of 1/8 to 1/1500.

Referring now to the contrast characteristics of a liquid crystal display device according to the present invention: if the gap between base plates of the liquid crystal display device is about 1 µm, the SmC* phase of the liquid crystal material loses its spiral construction so that the layer is aligned so as to be vertical to the base plates as aforementioned, i.e. the molecular axes of the molecules of the liquid crystal material are parallel to the base plates. In the case of the driving methods discussed above, the molecular axes are substantially at the "b" and "b"' positions or "a" and "a"' positions as shown in Figure 9. Therefore, there is no contrast change since the molecular axes are parallel to the base plates. This situation corresponds to a cross talk condition experienced in a non-lighting condition of a TN-type display device where the quality of the display is dependent on viewing angle.

A liquid crystal display device according to the present invention with a liquid crystal material with an SmC* phase produces a display which is independent not only of viewing angle but also of duty ratio and thus contrast.

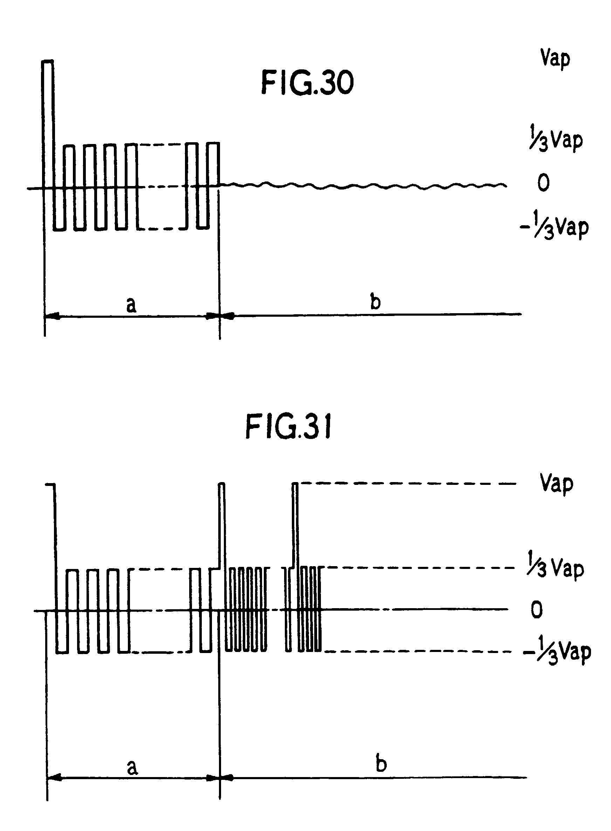

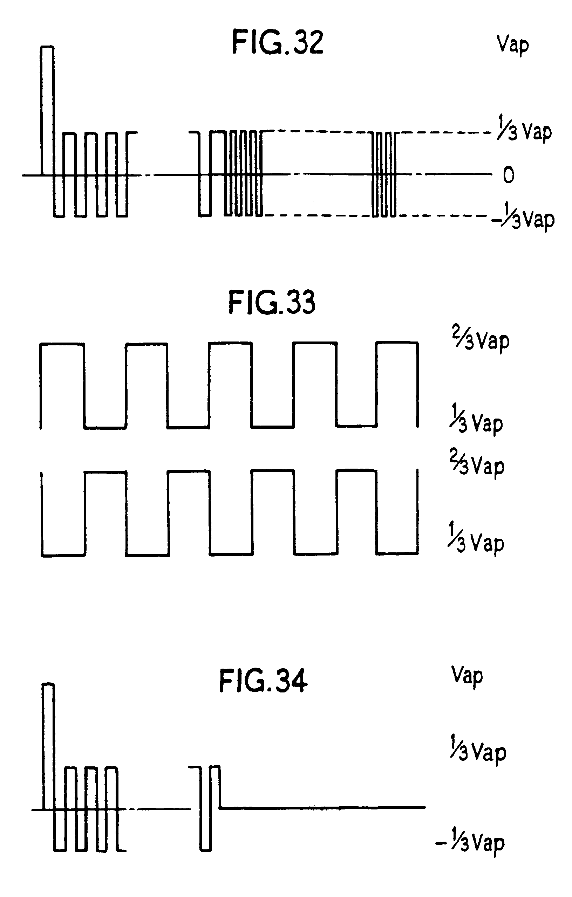

A further driving method for a display device according to the present invention will now be described with reference to Figure 30. The driving waveforms shown in Figure 30 illustrate the change of voltage applied to the liquid crystal material in the case where a display is held by making a driving circuit high impedance, after the display is performed by scanning one or several times using three types of driving waveforms. In Figure 30, "a" shows the scanning portion, and "b" shows a high impedance condition. The high impedance condition which corresponds to the "b" and "b"' positions of Figure 9 is easily understood because the optical transparent ratio is unchanged in a high impedance condition. This memory characteristic is substantially long and scanning is performed only when the display changes. Power consumption in the high impedance condition is zero and saves energy and further it is preferable for a stationary display. Figure 31 is similar to Figure 30 where the display is maintained by increasing the driving frequency after performing one or several scanning operations.

The driving method shown in Figure 30 memorises a condition by the high impedance condition gradually restores the molecular condition to the initial alignment condition after losing the outer controlling power of the applied voltage.

The driving method shown in Figure 31 gives an excellent memory characteristic to the display in comparison with the method of Figure 30. The phenomenon which turns to the initial alignment condition in the high impedance condition is greater with relatively strong alignment power and high temperature. Particularly, the phenomenon is greatly affected by temperature and, therefore, driving the display device by increasing the driving frequency as in Figure 31 is more preferable.

With the driving method of Figure 31, scanning is usually performed by increasing the driving frequency. Display data is generated from the display electrode side, or determined by bright or dark conditions.

Figure 32 shows a driving method similar to that of Figure 31. The difference between the driving method of Figures 31 and 32 is that in the latter positive and negative voltages in the non-selecting condition are equal AC pulses after performing one or several scannings, whereas in Figure 31 a different voltage AC pulse is periodically applied thereto. Thus in both cases the display is maintained with a predetermined desired frequency of scanning.

Figure 32 shows a waveform when ±1/3 Vₐₚ AC pulses are applied thereto. The driving waveform which is applied to the scanning and display electrodes after scanning is a waveform having different phase and amplitude as shown in Figure 33. In this case, scanning of the scanning electrode is not performed: one waveform of Figure 33 is applied to the scanning electrode and a waveform of Figure 33 is applied to the display electrode independently of the display data.

One embodiment of a driving method of a liquid crystal display device according to the present invention for obtaining a tone display will now be described. A basic method for the tone display generates a half tone display by modulating the ±Vₐₚ pulse width which is applied to the picture element on the selected scanning electrode. As far as change of the optical transparent ratio is concerned, the maximum level of the dark and bright conditions is obtained just as the ^{±}Vₐₚ voltage is applied. After that the optical transparent ratio declines but becomes constant after a time when it is proportional to the maximum optical transparent ratio when the ±Vₐₚ voltage is applied.

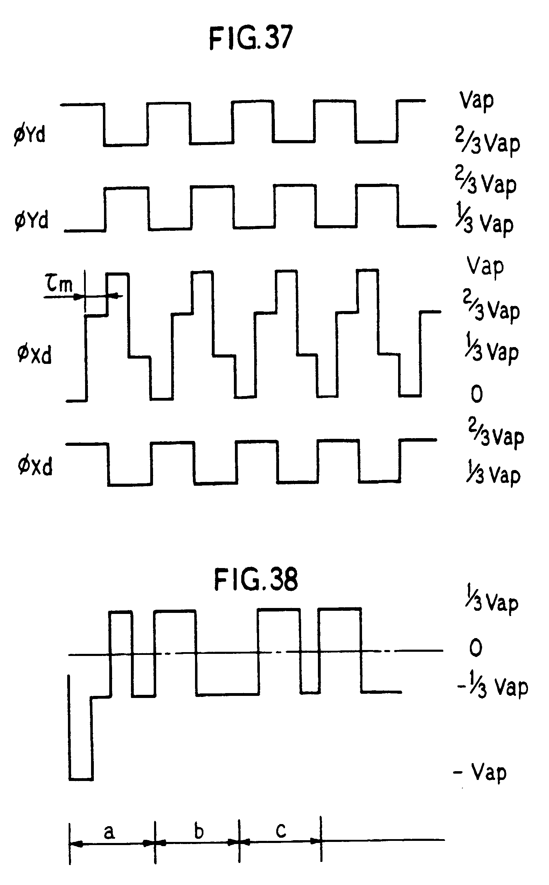

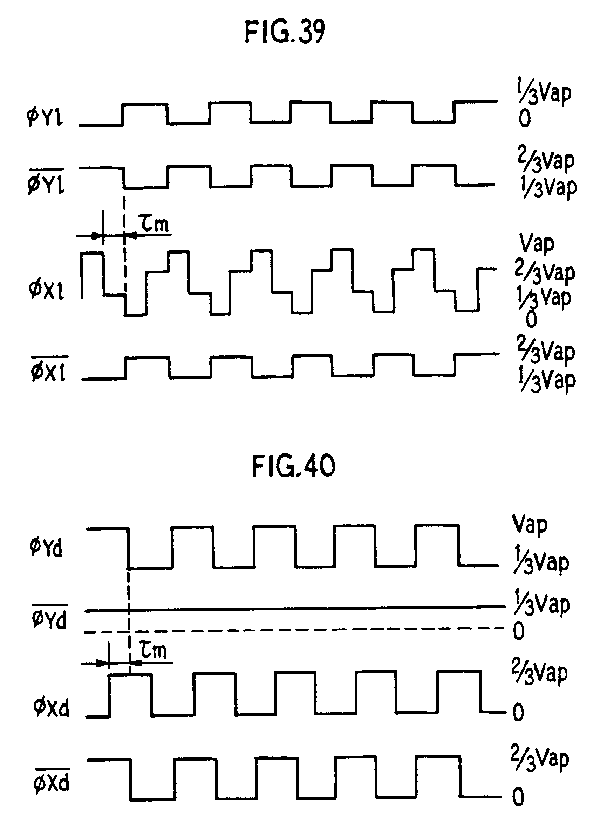

Using this phenomenon, it is possible to obtain a tone display by adjusting the optical transparent ratio in a selecting condition. Therefore, it is possible to obtain an optical transparent ratio which is proportional to the pulse width of the selecting voltage ±Vₐₚ and to obtain a tone display. Figures 37 to 40 show driving waveforms to perform this.

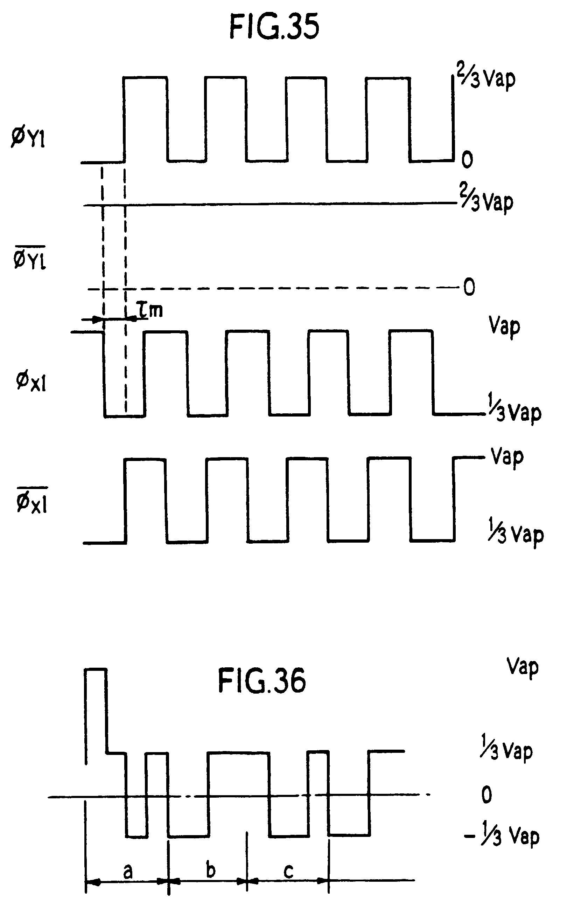

Figure 35 shows an embodiment in which the scanning waveform is changed to produce a tone display and is based upon the waveforms shown in Figure 12. The difference between Figures 35 and 12 is only in the segment signal, the other signals being the same. The selecting voltage Vₐₚ is modulated by adding a phase difference τm, the pulse width τap for the selecting voltage being as follows:$\text{τap = 1/2f - τm.}$

It is possible to achieve a tone display by adjusting the phase difference τm in response to the half tone level.

Figure 36 shows one example in which the voltage is applied from the signals in Figure 35.

In Figure 36 portion "a" shows a waveform when the scanning electrode is selected and the selecting signal is applied to the display electrode, portion "b" shows the waveform when the non-selecting signal is applied to the display electrode and the scanning electrode is not selected and portion "c" shows the waveform when the selecting signal is applied to the display electrode and the scanning electrode is not selected. As to portions "b" and "c", the times of application of the ±1/3 Vₐₚ voltage is considered to be equal to each other.

Figure 37 shows a waveform in which a non-selecting scanning signal in Figure 16 is changed to a tone display signal as in Figure 35. The difference between Figures 35 and 16 is that the segment selecting signal is step-shaped, the selecting voltage -Vₐₚ being narrowed by the pulse width τm, whereby the tone display is performed by adjusting the width τm according to the half tone level.

Figure 38 shows the waveform resulting from Figure 37 and is similar to Figure 36. Portions "a", "b" and "c" in Figure 38 are the same as in Figure 36 except of opposite polarity, namely, (1) shifting the phase and (2) forming a stepped waveform.

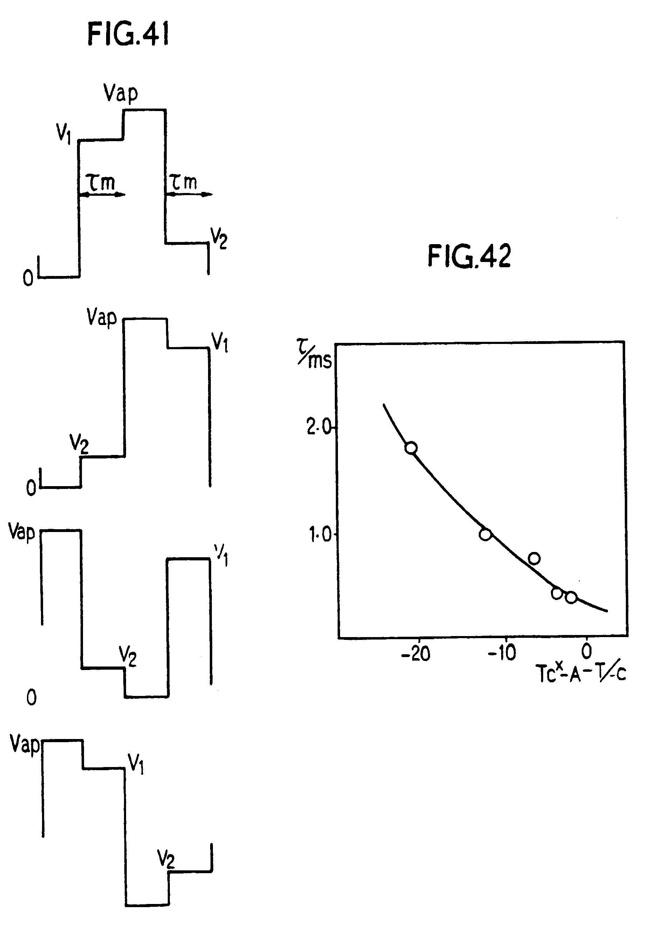

Figure 41 illustrates the formation of the stepped waveform. The upper two waveforms represent the bright condition and the lower two the dark condition. V₁ and V₂ are the voltages as follows:${\text{V}}_{\text{1}} {\text{= [1 - (2/a) V}}_{\text{ap]}}$${\text{V}}_{\text{2}} {\text{= (2/a) V}}_{\text{ap}}$ "a" is a prefered number, ±(1/a) Vₐₚ AC pulse is applied thereto in the non-selecting condition.

Temperature compensation is possible with driving methods of a liquid crystal display device according to the present invention. Figure 42 shows temperature change relative to respone time showing that the latter decreases with elevation of temperature. If a temperature is elevated and response time is reduced, a sufficient response time is performed by the non-selecting AC pulse voltage and pulse time width. However, with the same driving voltage or frequency at low temperature, the memory characteristic deteriorates and may be visible as flickering of the display.

For temperature compensation, the driving voltage and frequency are set for display at low temperature and the frequency is controlled according to increase of temperature, whereby temperature compensation is achieved. It is also possible to provide temperature compensation by controlling voltage, i.e. the selecting voltage Vₐₚ may be changed with change in temperature.

A liquid crystal display device according to the present invention with a liquid crystal material in the SmC* phase overcomes limitations of conventional X - Y matrix liquid crystal display devices. A multi-time-sharing display is performed by a simple matrix system, whereby it is possible to reduce the size of a driving IC. Further, it is possible to obtain a display panel having a great capacity at relatively low price since the panel is simple using no active elements.

## Claims

1. A method for driving a multi-element liquid crystal display device having ferro-electric liquid crystal therein, the method being characterised by the steps of: applying only one selecting electric field pulse having an amplitude and pulse width which exceed a threshold value of optical response of said ferro-electric liquid crystal to each element for the duration of one line scanning period; such that the molecular axis of the ferro-electric liquid crystal moves to one of two bistable positions, said selecting electric field pulse consisting only of a first d.c. pulse of one polarity followed by a second d.c. pulse of the opposite polarity; and applying non-selecting electric field pulses, each non-selecting electric field pulse having an amplitude and pulse width which are not greater than the threshold value to each element during a non-selecting term, said non-selecting electric field pulses including a series of pulse trains, the non-selecting electric field pulses in each pulse train being of alternating polarity; such that the molecular axis of the ferro-electric liquid crystal which is selected by the selecting electric field pulse is maintained without repeating the said selecting electric field pulse; the optical response of the ferro-electric liquid crystal being determined in accordance with the waveforms of the said selecting pulse or at least one said non-selecting pulse, and the pulse width of each non-selecting electric field pulse in each pulse train is less than the pulse width of each selecting electric field pulse.

2. A liquid crystal display device driven in a time-sharing mode, comprising a pair of electrodes spaced apart from each other, a ferro-electric liquid crystal layer disposed between the pair of electrodes, the liquid crystal having an optical response which is changed when an electric field pulse having an amplitude and pulse width which exceed a threshold value is applied thereto, and drive means connected between the pair of electrodes to apply only one selecting field pulse having an amplitude and pulse width which exceed the threshold value for the duration of one line scanning period, such that the molecular axis of the ferro-electric liquid crystal moves to one of two bistable positions, said selecting electric field pulse consisting only of a first d.c. pulse of one polarity followed by a second d.c. pulse of the opposite polarity; and to apply non-selecting electric field pulses, each having an amplitude and pulse width not exceeding the threshold value during a non-selecting term, the non-selecting electric field pulses including a series of pulse trains, the non-selecting electric field pulses in each pulse train being of alternating polarity; such that the molecular axis of the ferro-electric liquid crystal which is selected by the selecting electric field pulse is maintained without repeating the said selecting electric field pulse; the optical response of the layer being determined in accordance with the waveforms of the selecting pulse or at least one non-selecting pulse, the pulse width of each non-selecting pulse is less than the pulse width of each selecting pulse.

3. A device as claimed in claim 2, in which the drive means includes means for electrically disconnecting the pair of electrodes after the application of the non-selecting pulse train to the layer.

4. A liquid crystal display device as claimed in claim 2 or 3 characterised in that the drive means includes means for changing a driving frequency to compensate for changes in ambient temperature.

5. A liquid crystal display device as claimed in any preceding claim 2,3 or 4 characterised in that the drive means includes means for adjusting the voltage effective to change the bi-stable molecular alignments to compensate for changes in ambient temperature.

6. A liquid crystal display device as claimed in any of claims 2 to 5 whereby the ferro-electric liquid crystal layer comprises a chiral smectic liquid crystal layer.

7. A liquid crystal display device as claimed in any of claims 2 to 6 characterised in that the drive means includes means for applying an A.C. voltage having a high frequency sufficient to avoid the degradation of transparent intensity of the optical ON display state.

8. A liquid crystal display device as claimed in any of claims 2 to 7 characterised by including a liquid crystal panel having display and scanning electrodes in opposed relation to each other to define a matrix electrode structure, characterized by the drive means comprising an oscillating circuit for generating a clock signal, a driving voltage generating circuit for producing a driving voltage waveform, driving circuits for supplying a driving voltage according to the driving voltage waveform to the display electrodes and scanning electrodes, and a control circuit for controlling the driving voltage generating circuit and the driving circuits.

9. A liquid crystal display device as claimed in claim 8 characterised in that the control circuit has a first exclusive OR circuit for supplying a polarity changeover signal having a phase inverted with the changing ON or OFF to the other state to the driving voltage generating circuit and a second exclusive OR circuit for supplying a data signal having a phase inverted with the changing ON or OFF to the other state to the driving circuit.

10. A liquid crystal display device as claimed in claim 9 characterised in that the drive means, in operation, effects a first scanning operation for writing one of the optical ON and OFF display states and a second scanning operation for writing the other of the display states during one frame of operation.

11. A liquid crystal display device as claimed in any of claims 2 to 10 characterised in that the drive means include means for applying an A.C. voltage having no D.C. component.

12. A liquid crystal display device as claimed in any of claims 2 to 11 characterised in that the ferro-electric liquid crystal layer has a thickness sufficiently thin to lose the spiral molecular alignment of the layer.

13. A liquid crystal display device as claimed in claim 2 comprising: a ferro-electric liquid crystal aligned to establish two bi-stable display states; and characterized by drive means for applying a selected voltage ±Vₐₚ having a desired pulse amplitude and a pulse width to the liquid crystal to change one of the two bi-stable display states to the other bi-stable display state and for applying to the liquid crystal an A.C. pulse voltage having a pulse amplitude and a pulse width at least one of which is less than that of the selected voltage ±Vₐₚ to thereby hold the other bi-stable display state.

14. A liquid crystal display device as claimed in claim 13 characterised in that the drive means is arranged to apply a selected voltage ±Vₐₚ containing a D.C. component.

15. A liquid crystal display device as claimed in claim 13 characterised in that the drive means includes means for applying a selected voltage ±Vₐₚ containing no D.C. component.

16. A liquid crystal display device as claimed in any of claims 13 to 15 characterised in that the drive means includes means for applying a selected voltage having a polarity effective to change one of the two bi-stable display states to the other bi-stable display state during a first scanning operation and for applying another selected voltage having another polarity effective to change the other bi-stable display state to said one bi-stable display state during a second scanning operation.

17. A liquid crystal display device as claimed in any of claims 13 to 16 characterised in that the ferro-electric liquid crystal comprises ferro-electric liquid crystal molecules aligned to assume two bi-stable molecular alignment corresponding to the two bi-stable display states, respectively.

18. A liquid crystal display device as claimed in any of claims 13 to 17 characterised in that the drive means includes means for increasing the driving frequency after the drive means carries out a scanning operation for a given number of times.

19. A liquid crystal display device as claimed in any of claims 13 to 18 characterised in that the drive means includes means for applying to the liquid crystal a selected voltage having a modulated pulse width effective to develop an intermediate display state between the two bi-stable display states.

20. A liquid crystal display device as claimed in any of claims 13 to 19 characterised in that the drive means includes means for applying a selected voltage signal comprised of first pulse effective to reset the display state of the liquid crystal to one of the two bi-stable states and a successive second pulse having an opposite polarity effective to change the reset display state to the other bi-stable state.

21. A liquid crystal display device as claimed in any of claims 13 to 20 characterised in that the drive means includes means for applying to the liquid crystal a selected voltage having a modulated duration effective to develop an intermediate display state between the two bi-stable display states.

22. A liquid crystal display device as claimed in any of claims 13 to 21 characterised in that the drive means includes means for effecting a first scanning operation for writing one of the two bi-stable display states and for effecting a second scanning operation for writing the other bi-stable display state during one frame of operation.

23. A smectic liquid crystal display device as claimed in claim 2 characterised by comprising in combination: a liquid crystal panel including a pair of opposed base plates, electrodes disposed on the respective inner surfaces of the opposed base plates, alignment membranes shaped on the respective inner surfaces of the opposed base plates, and a smectic liquid crystal compound inserted between the opposed base plates at an interval less than a spiral pitch of the liquid crystal compound so that the liquid crystal compound is aligned by the alignment membranes to establish two bi-stable optical states; means for applying a liquid crystal operating voltage of one polarity in a first half of an electrode selecting operation to the electrodes so as to select one of the two bi-stable optical states and for applying another liquid crystal operating voltage of another polarity in a second half of the electrode selecting operation to the electrode so as to select the other bi-stable optical state, and means for applying to the electrodes an alternating voltage which is less than the liquid crystal operating voltage in a non-electrode selecting operation so as to hold the selected bi-stable optical state.

24. A liquid crystal display device as claimed in claim 2 characterised by comprising: a pair of opposed electrodes; a ferro-electric liquid crystal disposed between the pair of electrodes so that the ferro-electric liquid crystal loses a spiral molecular alignment thereof to establish two bi-stable molecular alignments in which molecules of the ferro-electric liquid crystal are not aligned in parallel to the boundary surface of the liquid crystal; means connected to the electrodes for applying a voltage to the liquid crystal in a time-sharing mode to select one of the two bi-stable molecular alignments; and a pair of polarisers for sandwiching the ferro-electric liquid crystal.

## Patentansprüche

1. Verfahren zum Betreiben einer aus mehreren Flüssigkristallelementen bestehenden Flüssigkristallanzeigevorrichtung, welche einen ferro-elektrischen Flüssigkristall enthält, wobei das Verfahren durch die Schritte gekennzeichnet ist: Anlegen von nur einem wählenden elektrischen Feldimpuls mit einer Amplitude und einer Impulsbreite, welche einen Schwellenwert eines optischen Ansprechvermögens des ferro-elektrischen Flüssigkristalls überschreiten, an jedes Element, derart, daß die Molekülachse des ferro-elektrischen Flüssigkristalls sich in eine von zwei bistabilen Stellungen bewegt, wobei der wählende elektrische Feldimpuls aus nur einem ersten Gleichspannungsimpuls einer Polarität gefolgt durch einen zweiten Gleichspannungsimpuls der entgegengesetzten Polarität besteht, und Anlegen eines nicht wählenden elektrischen Feldimpulses an jedes Element während einer Nichtwählzeitspanne, wobei jeder nicht wählende elektrische Feldimpuls eine Amplitude und eine Impulsbreite aufweist, welche nicht größer sind als der Schwellenwert, wobei die nicht wählenden elektrischen Feldimpulse eine Reihe von Impulszügen umfassen, wobei die nicht wählenden elektrischen Feldimpulse in jedem Impulszug von alternierender Polarität sind, derart, daß die Molekülachse des ferroelektrischen Flüssigkristalls, welche durch den wählenden elektrischen Feldimpuls ausgewählt wird, beibehalten bleibt, ohne den wählenden elektrischen Feldimpuls zu wiederholen, wobei das optische Ansprechvermögen des ferro-elektrischen Flüssigkristalls gemäß den Wellenformen des wählenden Feldimpulses oder wenigstens eines der nicht wählenden Feldimpulse bestimmt wird, und wobei die Impulsbreite jedes nicht wählenden elektrischen Feldimpulses in jedem Impulszug kleiner ist als die impulsbreite jedes wählenden elektrischen Feldimpulses.

2. Flüssigkristallanzeigevorrichtung, welche in einem Time-Sharing-Modus betrieben wird, umfassend ein Paar von zueinander im Abstand angeordneten Elektroden, eine ferro-elektrische Flussigkristallschicht, welche zwischen dem Paar von Elektroden angeordnet ist, wobei der Flüssigkristall ein optisches Ansprechvermögen aufweist, welches verändert wird, wenn ein elektrischer Feldimpuls an diesen angelegt wird, der eine Amplitude und eine Impulsbreite aufweist, welche einen Schwellenwert überschreiten, und eine Treibereinrichtung zwischen dem Paar von Elektroden, um nur einen wählenden Feldimpuls anzulegen, welcher eine Amplitude und eine Impulsbreite aufweist, die den Schwellenwert überschreiten, derart, daß die Molekülachse des ferro-elektrischen Flüssigkristalls sich in eine von zwei bistabilen Stellungen bewegt, wobei der wählende elektrische Feldimpuls nur aus einem ersten Gleichspannungsimpuls einer Polarität gefolgt durch einen zweiten Gleichspannungsimpuls der entgegengesetzten Polarität besteht, und um nicht wählende elektrische Feldimpulse, welche jeweils eine Amplitude und eine Impulsbreite aufweisen, welche den Schwellenwert nicht überschreiten, während einer Nichtwählzeitspanne anzulegen, wobei die nicht wählenden elektrischen Feldimpulse eine Reihe von Impulszügen umfassen, wobei die nicht wählenden elektrischen Feldimpulse in jedem Impulszug von alternierender Polarität sind, derart, daß die Molekülachse des ferro-elektrischen Flüssigkristalls, welche durch die wählenden elektrischen Feldimpulse gewählt ist, beibehalten bleibt, ohne die wählenden elektrischen Feldimpulse zu wiederholen, wobei das optische Ansprechvermögen der Schicht gemäß den Wellenformen des wählenden Impulses oder wenigstens eines nicht wählenden Impulses bestimmt ist, wobei die Impulsbreite jedes nicht wählenden Impulses kleiner Ist als die Impulsbreite jedes wählenden Impulses.

3. Vorrichtung nach Anspruch 2, in welcher die Treibereinrichtung Mittel umfaßt, um das Paar von Elektroden nach dem Anlegen des nicht wählenden Impulszugs an die Schicht elektrisch zu trennen.

4. Flüssigkristallanzeigevorrichtung nach Anspruch 2 oder 3, dadurch gekennzeichnet, daß die Treibereinrichtung eine Einrichtung zum Ändern der Treiberfrequenz einschließt, um Änderungen in der Umgebungstemperatur zu kompensieren.

5. Flüssigkristallanzeigevorrichtung nach einem der vorhergehenden Ansprüche 2, 3 oder 4, dadurch gekennzeichnet, daß die Treibereinrichtung eine Einrichtung zum Einstellen der Spannung einschließt, die eine Änderung in der bistabilen Molekularaüsrichtung bewirkt, um Änderungen in der Umgebungstemperatur zu kompensieren.

6. Flüssigkristallanzeigevorrichtung nach einem der Ansprüche 2 bis 5, bei der die ferro-elektrische Flüssigkristallschicht eine chiral-smektische Flüssigkristallschicht umfaßt.

7. Flüssigkristallanzeigevorrichtung nach einem der Ansprüche 2 bis 6, dadurch gekennzeichnet, daß die Treibereinrichtung eine Einrichtung zum Anlegen einer Wechselspannung mit einer so hohen Frequenz einschließt, die ausreicht, eine Beeinträchtigung der Transparenz des optischen Anzeigezustandes zu vermeiden.

8. Flüssigkristallanzeigevorrichtung nach einem der Ansprüche 2 bis 7, welche dadurch gekennzeichnet ist, daß sie eine Flüssigkristallplatte mit Anzeige- und Abtastelektroden einschließt, die einander gegenüber angeordnet sind, so daß eine Elektrodenmatrixstruktur gebildet ist, dadurch gekennzeichnet, daß die Treibereinrichtung einen Schwingkreis zum Erzeugen eines Taktsignales, eine Treiberspannungsgeneratorschaltung zum Erzeugen einer Treiberspannungswellenform, Treiberschaltungen zum Liefern einer Treiberspannung nach Maßgabe der Treiberspannungswellenform zu den Anzeigeelektroden und zu den Abtastelektroden, und eine Steuerschaltung zum Steuern der Treiberspannungsgeneratorschaltung und der Treiberschaltungen umfaßt.

9. Flüssigkristallanzeigevorrichtung nach Anspruch 8, dadurch gekennzeichnet, daß die Steuerschaltung ein erstes Exklusiv-ODER-Glied zum Liefern eines Polaritätsumschaltsignals mit einer Phase, die mit dem Ändern des An- oder Auszustandes in den jeweils anderen Zustand umgekehrt wird, zur Treiberspannungsgeneratorschaltung und ein zweites Exklusiv-ODER-Glied zum Liefern eines Datensignals mit einer Phase, die mit der Änderung des An- oder Auszustandes in den jeweils anderen Zustand umgekehrt wird, zur Treiberschaltung aufweist.

10. Flüssigkristallanzeigevorrichtung nach Anspruch 9, dadurch gekennzeichnet, daß die Treibereinrichtung während des Betriebes einen ersten Abtastvorgang zum Schreiben eines der optischen An- und Ausanzeigezustände und einen zweiten Abtastvorgang zum Schreiben des jeweils anderen Anzeigezustandes während einer Betriebseinheit bewirkt.

11. Flüssigkristallanzeigevorrichtung nach einem der Ansprüche 2 bis 10, dadurch gekennzeichnet, daß die Treibereinrichtung eine Einrichtung zum Anlegen einer Wechselspannung ohne Gleichspannungsanteil einschließt.

12. Flüssigkristallanzeigevorrichtung nach einem der Ansprüche 2 bis 11, dadurch gekennzeichnet, daß die ferro-elektrische Flüssigkristallschicht eine Stärke hat, die ausreichend gering ist, um die spiralförmige molekulare Ausrichtung der Schicht zu verlieren.

13. Flüssigkristallanzeigevorrichtung nach Anspruch 2, mit einem ferro-elektrischen Flüssigkristall, der so ausgerichtet ist, daß zwei bistabile Anzeigezustände gebildet sind, gekennzeichnet durch eine Treibereinrichtung zum Anlegen einer gewählten Spannung ± Vₐₚ mit einer gewünschten Impulsamplitude und einer Impulsbreite an den Flüssigkristall zum Ändern eines der zwei bistabilen Anzeige zustände in den anderen bistabilen Anzeigezustand und zum Anlegen einer Impulswechselspannung an den Flüssigkristall mit einer Impulsamplitude und einer Impulsbreite, von denen wenigstens eine kleiner als die der gewählten Spannung ± Vₐₚ ist, um dadurch den anderen bistabilen Anzeigezustand beizubehalten.

14. Flüssigkristallanzeigevorrichtung nach Anspruch 13, dadurch gekennzeichnet, daß die Treibereinrichtung so ausgebildet ist, daß sie eine gewählte Spannung ± Vₐₚ anlegt, die einen Gleichspannungsanteil enthält.

15. Flüssigkristallanzeigevorrichtung nach Anspruch 13, dadurch gekennzeichnet, daß die Treibereinrichtung eine Einrichtung zum Anlegen einer gewählten Spannung ± Vₐₚ, die keinen Gleichspannungsanteil enthält, einschließt.

16. Flüssigkristallanzeigevorrichtung nach einem der Ansprüche 13 bis 15, dadurch gekennzeichnet, daß die Treibereinrichtung eine Einrichtung zum Anlegen einer gewählten Spannung mit einer Polarität, die eine Änderung eines der beiden bistabilen Anzeigezustände in den jeweils anderen bistabilen Anzeigezustand bewirkt, während eines ersten Abtastvorganges und zum Anlegen einer anderen gewählten Spannung mit einer anderen Polarität, die eine Änderung des anderen bistabilen Anzeigezustandes in den einen bistabilen Anzeige zustand während eines zweiten Abtastvorganges bewirkt, einschließt.

17. Flüssigkristallanzeigevorrichtung nach einem der Ansprüche 13 bis 16, dadurch gekennzeichnet, daß der ferro-elektrische Flüssigkristall ferro-elektrische Flüssigkristallmoleküle umfaßt, die so ausgerichtet werden, daß sie zwei bistabile Molekularausrichtungen annehmen, die den beiden bistabilen Anzeigezuständen jeweils entsprechen.

18. Flüssigkristallanzeigevorrichtung nach einem der Ansprüche 13 bis 17, dadurch gekennzeichnet, daß die Treibereinrichtung eine Einrichtung zum Erhöhen der Treiberfrequenz, nachdem die Treibereinrichtung einen Abtastvorgang mehrmals in einer gegebenen Anzahl ausgeführt hat, einschließt.

19. Flüssigkristallanzeigevorrichtung nach einem der Ansprüche 13 bis 18, dadurch gekennzeichnet, daß die Treibereinrichtung eine Einrichtung zum Anlegen einer gewählten Spannung mit einer modulierten Imnpulsbreite, die einen Zwischenanzeigezustand zwischen den beiden bistabilen Anzeigezuständen entwickelt, an den Flüssigkristall einschließt.

20. Flüssigkristallanzeigevorrichtung nach einem der Ansprüche 13 bis 19, dadurch gekennzeichnet, daß die Treibereinrichtung eine Einrichtung zum Anlegen eines gewählten Spannungssignals einschließt, das aus einem ersten Impuls, der ein Rücksetzen des Anzeigezustandes des Flüssigkristalls auf einen der beiden bistabilen Zustände bewirkt, und einen folgenden zweiten Impuls besteht, der eine entgegengesetzte Polarität hat, die eine Änderung des rückgesetzten Anzeigezustandes in den jeweils anderen bistabilen Zustand bewirkt.

21. Flüssigkristallanzeigevorrichtung nach einem der Ansprüche 13 bis 20, dadurch gekennzeichnet, daß die Treibereinrichtung eine Einrichtung zum Anlegen einer gewählten Spannung mit einer modulierten Dauer, die die Entwicklung eines Zwischenanzeigezustandes zwischen den beiden bistabilen Anzeigezuständen bewirkt, an den Flüssigkristall einschließt.

22. Flüssigkristallanzeigevorrichtung nach einem der Ansprüche 13 bis 21, dadurch gekennzeichnet, daß die Treibereinrichtung eine Einrichtung zum Bewirken eines ersten Abtastvorganges zum Schreiben eines der beiden bistabilen Anzeigezustände und zum Bewirken eines zweiten Abtastvorganges zum Schreiben des anderen bistabilen Anzeigezustandes während einer Betriebseinheit einschließt.

23. Smektische Flüssigkristallanzeigevorrichtung nach Anspruch 2, dadurch gekennzeichnet, daß sie in Kombination umfaßt: eine Flüssigkristallplatte mit zwei gegenüberliegenden Grundplatten, Elektroden, die an den jeweiligen Innenflächen der gegenüberliegenden Grundplatten angeordnet sind, Ausrichtungsmembrane, die auf den jeweiligen Innenflächen der gegenüberliegenden Grundplatten geformt sind, und eine smektische Flüssigkristallmasse, die zwischen den gegenüberliegenden Grundplatten in Abständen angeordnet ist, die kleiner als die Spiralganghöhe der Flüssigkristallmasse ist, so daß die Flüssigkristallmasse durch die Ausrichtungsmembrane ausgerichtet wird und dadurch zwei bistabile optische Zustände gebildet werden, eine Einrichtung zum Anlegen einer Flüssigkristallbetriebsspannung mit einer Polarität während der ersten Hälfte des Elektrodenwählbetriebes an die Elektroden, um einen der beiden bistabilen optischen Zustände zu wählen, und zum Anlegen einer anderen Flüssigkristallbetriebsspannung mit einer anderen Polarität während der zweiten Hälfte des Elektrodenwählvorganges, an die Elektrode, um den anderen bistabilen optischen Zustand zu wählen, und eine Einrichtung zum Anlegen einer Wechselspannung, die kleiner als die Flüssigkristallbetriebsspannung ist, an die Elektroden im Nichtelektrodenwählbetrieb, um den gewählten bistabilen optischen Zustand beizubehalten.

24. Flüssigkristallanzeigevorrichtung nach Anspruch 2, dadurch gekennzeichnet, daß sie umfaßt: ein Paar gegenüberliegende Elektroden, einen ferro-elektrischen Flüssigkristall, der zwischen dem Paar von Elektroden angeordnet ist, so daß der ferro-elektrische Flüssigkristall seine spiralförmige Molekularausrichtung verliert, um dadurch zwei bistabile molekulare Ausrichtungen zu bilden, in denen die Moleküle des ferro-elektrischen Flüssigkristalls nicht parallel zur Grenzfläche des Flüssigkristalls ausgerichtet sind, eine Einrichtung, die mit den Elektroden verbunden ist, um eine Spannung an den Flüssigkristall im Time-Sharing-Betrieb zu legen und dadurch eine der beiden bistabilen molekularen Ausrichtungen zu wählen, und ein Paar von Polarisatoren, um den ferro-elektrischen Flüssigkristall sandwichartig anzuordnen.

## Revendications

1. Procédé pour commander un dispositif d'affichage à cristal liquide du type à éléments multiples, contenant un cristal ferro-électrique, procédé qui comporte les phases opératoires, qui consistent ; à appliquer au moins une impulsion de champ électrique de sélection, possédant une amplitude et une largeur d'impulsion excédant une valeur de seuil de la réponse optique dudit cristal liquide ferro-électrique, à chaque élément, de sorte que l'axe moléculaire du cristal liquide ferro-électrique vienne dans l'une de deux positions bistables, l'impulsion de champs électrique de sélection consistant seulement en une première impulsion de courant continu d'une polarité suivie d'une seconde impulsion de courant continu de polarité opposée; et à appliquer des impulsions de champ électrique de non-sélection, chaque impulsion de champ électrique de non-sélection, ayant une amplitude et une largeur d'impulsions n'excédant pas la valeur de seuil, à chaque élément pendant une durée de non-sélection, lesdites impulsions de champ électrique de non-sélection comprenant une série de trains d'impulsions, les impulsions de champ électrique de non sélection de chaque train d'impulsion étant de polarité alternée de sorte que l'axe moléculaire du cristal liquide ferro-électrique qui est sélectionné par l'impulsion de champ électrique de sélection soit maintenu sans répéter l'impulsion de champ électrique de sélection; la réponse optique du cristal liquide ferro-électrique étant déterminée en fonction des formes d'ondes de l'impulsion de sélection ou d'au moins une impulsion de non-sélection, et la largeur d'impulsion de chaque impulsion de champ électrique de non-sélection étant, dans chaque train d'impulsions inférieure à la largeur d'impulsion de chaque impulsion de champ électrique de sélection.

2. Dispositif d'affichage à cristal liquide commandé en mode à partage de temps, comprenant une paire d'électrodes distantes l'une de l'autre, une couche de cristal liquide ferro-électrique disposée entre la paire d'électrodes, le cristal liquide ayant une réponse optique qui est modifiée lorsqu'il lui est appliqué une impulsion de champ électrique ayant une amplitude et une largeur d'impulsion excédant une valeur de seuil, et des moyens de commande, reliés entre la paire d'électrodes, en vue d'appliquer au moins une impulsion de champ de sélection ayant une amplitude et une largeur d'impulsion excédant la valeur de seuil , de sorte que l'axe moléculaire du cristal liquide ferro-électrique vienne dans l'une de deux positions bistables, l'impulsion de champs électrique de sélection consistant seulement en une première impulsion de courant continu d'une polarité suivie d'une seconde impulsion de courant continu de polarité opposée et en vue d'appliquer des impulsions de champ électrique de non-sélection, dont chacune possède une amplitude et une largeur d'impulsion n'excédant pas la valeur de seuil pendant une durée de non-sélection, les impulsions de champ électrique de non-sélection comprenant une série de trains d'impulsions, les impulsions de champ électrique de non sélection étant, dans chaque train d'impulsion, de polarité alternée de sorte que l'axe moléculaire du cristal liquide ferro-électrique qui est sélectionné par l'impulsion de champ électrique de sélection soit maintenu sans répéter l'impulsion de champ électrique de sélection; la réponse optique de la couche étant déterminée en fonction des formes d'ondes de l'impulsion de sélection ou d'au moins une impulsion de non sélection, la largeur d'impulsion de chaque impulsion de non-sélection étant inférieure à celle de chaque impulsion de sélection.

3. Dispositif tel que revendiqué dans la revendication 2, caractérisé par le fait que les moyens de commande comprennent des moyens pour déconnecter électriquement la paire d'électrodes, après l'application, à la couche, du train d'impulsions de non sélection.

4. Dispositif d'affichage à cristal liquide tel que revendiqué dans les revendications 2 ou 3, caractérisé par le fait que les moyens d'attaque comprennent des moyens pour changer une fréquence d'attaque en vue de compenser les changements de la température ambiante.

5. Dispositif d'affichage à cristal liquide tel que revendiqué dans l'une des revendications précédentes 2, 3 ou 4, caractérisé par le fait que les moyens d'attaque comprennent des moyens pour ajuster la tension et pour que celle-ci soit efficace en vue de modifier l'alignement moléculaire bistable, pour compenser les changements de la température ambiante.

6. Dispositif d'affichage à cristal liquide tel que revendiqué dans l'une quelconque des revendications 2 à 5, la couche de cristal liquide ferro-électrique comprenant une couche de cristal liquide chiral smectique.

7. Dispositif d'affichage à cristal liquide tel que revendiqué dans l'une quelconque des revendications 2 à 6, caractérisé par le fait que les moyens d'attaque comprennent des moyens pour appliquer une tension alternative ayant une haute fréquence suffisante pour éviter la dégradation de l'intensité de transparence de l'état de transmission optique du dispositif d'affichage.

8. Dispositif d'affichage à cristal liquide tel que revendiqué dans l'une quelconque des revendications 2 à 7, caractérisé par le fait qu'il comprend un panneau de cristal liquide ayant des électrodes d'affichage et de balayage opposées les unes ou autres de manière à définir une structure d'électrodes en forme de matrice, et caractérisé par le fait que les moyens d'attaque comprennent un circuit oscillant pour engendrer un signal d'horloge, un circuit engendrant une tension d'attaque pour produire une forme d'onde de la tension d'attaque, des circuits d'attaque pour fournir, aux électrodes d'affichage et aux électrodes de balayage, une tension d'attaque qui est fonction de la forme d'onde de la tension d'attaque, et un circuit de commande pour commander le circuit qui engendre la tension d'attaque et les circuits d'attaque.

9. Dispositif d'affichage à cristal liquide tel que revendiqué dans la revendication 8, caractérisé par le fait que le circuit de commande possède un premier circuit OU-EXCLUSIF pour appliquer au circuit de génération de la tension d'attaque, un signal de changement de polarité, ayant une phase inversée avec le passage de l'état de transmission optique ou de l'état de blocage optique à l'autre état, et un second circuit OU-EXCLUSIF, pour fournir au circuit d'attaque, un signal de donnée ayant une phase inversée lors du passage de l'état de transmission ou de l'état de blocage optique à l'autre état.

10. Dispositif d'affichage à cristal liquide tel que revendiqué dans la revendication 9, caractérisé par le fait que les moyens d'attaque, lors du fonctionnement, effectuent une première opération de balayage pour l'écriture de l'un des états de transmission de blocage de l'affichage optique, et une seconde opération de balayage pour l'écriture de l'autre des états d'affichage pendant une séquence de fonctionnement.

11. Dispositif d'affichage à cristal liquide tel que revendiqué dans l'une des revendications 2 à 10, caractérisé par le fait que les moyens d'attaque comprennent des moyens pour appliquer une tension alternative ne présentant pas de composante continue.

12. Dispositif d'affichage à cristal liquide tel que revendiqué dans l'une quelconque des revendications 2 à 11, caractérisé par le fait que la couche de cristal liquide ferro-électrique possède une épaisseur suffisamment mince pour perdre l'alignement moléculaire en hélice de la couche.

13. Dispositif d'affichage à cristal liquide tel que revendiqué dans la revendication 2, comprenant : un cristal liquide ferro-électrique aligné pour établir deux états d'affichage bistables ; et caractérisé par des moyens d'attaque pour appliquer, au cristal liquide, une tension sélectionnée ± Vₐₚ ayant une amplitude d'impulsion et une largeur d'impulsion désirées pour changer l'un des deux états d'affichage bistable pour l'autre état d'affichage bistable et pour appliquer au cristal liquide une impulsion de tension alternative ayant une amplitude d'impulsion et une largeur d'impulsion dont au moins l'une est inférieure à celle de la tension ± Vₐₚ choisie, en vue de maintenir l'autre état d'affichage bistable.

14. Dispositif d'affichage à cristal liquide tel que revendiqué dans la revendication 13, caractérisé par le fait que les moyens d'attaque sont agencés pour appliquer une tension sélectionnée ± Vₐₚ comportant une composante de courant continu.

15. Dispositif d'affichage à cristal liquide tel que revendiqué dans la revendication 13, caractérisé par le fait que les moyens d'attaque comprennent des moyens pour appliquer une tension sélectionnée ± Vₐₚ ne comportant aucune composante continue.

16. Dispositif d'affichage à cristal liquide tel que revendiqué dans l'une quelconque des revendications 13 à 15, caractérisé par le fait que les moyens d'attaque comprennent des moyens pour appliquer une tension sélectionnée ayant une polarité apte à changer l'un des deux états d'affichage bistables en l'autre état d'affichage bistable pendant une première opération de balayage et pour appliquer une autre tension sélectionnée ayant une autre polarité et capable de changer l'autre état d'affichage bistable pour ledit premier état d'affichage bistable pendant une seconde opération de balayage.

17. Dispositif d'affichage à cristal liquide tel que revendiqué dans l'une quelconque des revendications 13 à 16, caractérisé par le fait que le cristal liquide ferro-électrique comporte des molécules de cristal liquide ferro-électrique, alignées pour assumer deux alignements moléculaires bistables correspondant respectivement aux deux états d'affichage bistables.

18. Dispositif d'affichage à cristal liquide tel que revendiqué dans l'une quelconque des revendications 13 à 17, caractérisé par le fait que les moyens d'attaque comprennent des moyens pour augmenter la fréquence d'attaque après que les moyens d'attaque exécutent une opération de balayage pour un nombre de fois donné.

19. Dispositif d'affichage à cristal liquide tel que revendiqué dans l'une quelconque des revendications 13 à 18, caractérisé par le fait que les moyens d'attaque comprennent des moyens pour appliquer au cristal liquide une tension sélectionnée, ayant une largeur d'impulsion modulée, capable de développer un état d'affichage intermédiaire entre les deux états d'affichage bistables.

20. Dispositif d'affichage à cristal liquide tel que revendiqué dans l'une quelconque des revendications 13 à 19, caractérisé par le fait que les moyens d'attaque comprennent des moyens pour appliquer un signal de tension sélectionné comportant une première impulsion capable de ramener l'état d'affichage du cristal liquide dans l'un des deux états bistables et une seconde impulsion successive ayant une polarité opposée et capable de faire passer de l'état d'affichage mentionné ci-dessus à l'autre état bistable.

21. Dispositif d'affichage à cristal liquide tel que revendiqué dans l'une quelconque des revendications 13 à 20, caractérisé par le fait que les moyens d'attaque comprennent des moyens pour appliquer au cristal liquide une tension sélectionnée ayant une durée effective modulée pour développer un état d'affichage intermédiaire entre les deux affichages bistables.

22. Dispositif d'affichage à cristal liquide tel que revendiqué dans l'une quelconque des revendications 13 à 21, caractérisé par le fait que les moyens d'attaque comprennent des moyens pour effectuer une première opération de balayage pour écrire l'un des deux états d'affichage bistables et pour effectuer une seconde opération de balayage pour écrire l'autre état d'affichage bistable pendant un cadre de l'opération.

23. Dispositif d'affichage à cristal liquide du type smectique, tel que revendiqué dans la revendication 2, caractérisé par le fait qu'il comporte, en combinaison : un panneau à cristal liquide comportant une paire de plaques de base opposées, des électrodes disposés sur les faces intérieures respectives des plaques de base opposées, des membranes d'alignement conformées sur les faces intérieures respectives des plaques de base opposées, et un composé d'un cristal liquide smectique inséré entre les plaques de base opposées, à un intervalle qui est inférieur à un pas d'hélice du composé du cristal liquide, de manière que le composé de cristal liquide soit aligné par les membranes d'alignement pour établir deux états optiques bistables ; des moyens pour appliquer aux électrodes une tension de fonctionnement du cristal liquide, ayant une première polarité, dans une première demi-opération de sélection d' électrode, de manière à sélectionner l'un des deux états optiques bistables, et pour appliquer à l'électrode, une autre tension de fonctionnement du cristal liquide, ayant une autre polarité, dans une seconde moitié de fonctionnement de sélection d'électrode, de manière à sélectionner l'autre état optique bistable, et des moyens pour appliquer aux électrodes une tension alternative qui est inférieure à la tension de fonctionnement du cristal liquide, dans une opération de non sélection d'électrode, de manière à maintenir l'état optique bistable sélectionné.

24. Dispositif d'affichage à cristal liquide tel que revendiqué dans la revendication 2, caractérisé par le fait qu'il comprend : une paire d'électrodes opposées ; un cristal liquide ferro-électrique disposé entre la paire d'électrodes de manière à ce que le cristal liquide ferro-électrique perde son alignement moléculaire en hélice, en vue d'établir deux aligmenents moléculaires bistables dans lesquels les molécules du cristal liquide ferro-électrique ne sont pas alignées parallèlement à la surface limite du cristal liquide ; des moyens reliés aux électrodes pour appliquer une tension au cristal liquide en un mode en partage de temps en vue de sélectionner l'un des deux alignements moléculaires bistables ; et une paire de polariseurs pour enfermer entre eux le cristal liquide ferro-électrique.
